(19) Europäisches Patentamt / European Patent Office / Office européen des brevets

(11) **EP 2 081 997 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(21) Anmeldenummer: **07857061.1**

(22) Anmeldetag: **21.12.2007**

(51) Int Cl.:
*C09C 1/64* (2006.01)        *B22F 1/00* (2006.01)
*B22F 9/08* (2006.01)

(86) Internationale Anmeldenummer:
**PCT/EP2007/011348**

(87) Internationale Veröffentlichungsnummer:
**WO 2008/077611 (03.07.2008 Gazette 2008/27)**

(54) **ALUMINIUMGRIESS FÜR DÜNNE, PLÄTTCHENFÖRMIGE EFFEKTPIGMENTE, VERFAHREN ZU DESSEN HERSTELLUNG UND VERWENDUNG DESSELBEN**

ALUMINIUM SHOT FOR THIN, PLATE-SHAPED EFFECT PIGMENTS, METHOD FOR THE PRODUCTION THEREOF, AND USE OF SAME

POUDRE D'ALUMINIUM POUR PIGMENTS À EFFET MINCES ET LAMELLAIRES, LEUR PROCÉDÉ DE RÉALISATION ET LEUR UTILISATION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.12.2006 DE 102006062270**

(43) Veröffentlichungstag der Anmeldung:
**29.07.2009 Patentblatt 2009/31**

(73) Patentinhaber: **Eckart GmbH**
**91235 Hartenstein (DE)**

(72) Erfinder:
• **TRUMMER, Stefan**
**90480 Nürnberg (DE)**
• **GREB, Marco**
**90489 Nürnberg (DE)**
• **ZIEGLER, Walter**
**91235 Velden (DE)**

• **SULEK, Klaus**
**91344 Waischenfeld (DE)**
• **SCHLEGL, Thomas**
**91245 Simmelsdorf (DE)**
• **SCHAAL, Martin**
**91224 Hohenstadt (DE)**
• **PLEIER, Manfred**
**90518 Altdorf (DE)**

(74) Vertreter: **Walcher, Armin et al**
**Louis, Pöhlau, Lohrentz**
**Postfach 3055**
**90014 Nürnberg (DE)**

(56) Entgegenhaltungen:
**EP-A- 1 211 003        EP-A- 1 424 371**
**EP-A- 1 621 586        WO-A-2004/087816**
**DE-A1- 2 314 874**

**Beschreibung**

Die Erfindung betrifft einen Aluminiumgrieß zur Herstellung von sehr dünnen, plättchenförmigen Effektpigmenten mit einer engen relativen Breite der Dickenverteilung. Weiterhin betrifft die Erfindung ein Verfahren zur Herstellung eines Aluminiumgrießes und dessen Verwendung als Lasermarkierungsmittel für transparente Kunststoffmaterialien.

Metallgrieße sind seit langem bekannt. Sie werden u. a. auch als Ausgangsmaterial zur Herstellung von Metalleffektpigmenten verwendet.

Zur Herstellung von Aluminiumgrieß ("atomized powder") wird hochreines Aluminium in Schmelzöfen, beispielsweise Induktionsöfen ("Atomizern"), bei Temperaturen von etwa 700 °C geschmolzen und die flüssige Aluminiumschmelze über ein geeignetes Düsensystem durch hoch komprimiertes Gas oder Luft fein zerteilt. Die Aluminiumpartikel des Aluminiumgrießes werden abgekühlt und gesammelt, ggf. gemischt und homogenisiert sowie klassiert.

Derartige Aluminiumgrieße sind kommerziell beispielsweise bei der Fa. Ecka Granules (D-91235, Velden, Deutschland) erhältlich.

Der Aluminiumgrieß liegt - abhängig von den Verdüsungsparametern - in passivierter Form als isometrisches Gemisch vor.

Die Aluminiumgrießpartikel weisen unterschiedliche Formen, beispielsweise können diese rund, kugelförmig oder ellipsoid bzw. spratzig sein. Der Aluminiumgehalt beträgt mindestens 99,0 %.

Die Vermahlung des Aluminiumgrießes erfolgt in der Regel nach dem bekannten Hallschen Nassmahl-Verfahren in herkömmlichen Mahlwerken, z. B. in Kugelmühlen, mit Hilfe von Mahlkörpern, beispielsweise sphärischen Körpern wie Kugeln, bei Temperaturen von 10°C bis 70°C, mit Testbenzin als Mahlmedium und Öl- oder Stearinsäure als Mahlhilfsmittel (Schmiermittel), wodurch die runden Aluminiumpartikeln zu plättchenförmigen Teilchen, die auch als Aluminiumflakes bezeichnet werden, verformt bzw. zerkleinert werden. Die bei der Vermahlung eingesetzten Zerkleinerung- oder Verformungsmittel sowie das Schmiermittel entsprechen dem jeweiligen Verwendungszweck der Aluminiumpigmente.

Als Schmiermittel wird eine Vielzahl von chemischen Verbindungen verwendet. Beispielsweise werden seit langer Zeit Fettsäuren mit Alkylresten von 10 bis 24 C-Atomen verwendet. Vorzugsweise werden Stearinsäure, Ölsäure oder Mischungen derselben eingesetzt.

Die als Vermahlungsprodukte erhaltenen plättchenförmigen Aluminiumpigmente bzw. Aluminiumflakes können einer Größenklassifikation unterzogen und anschließend in üblicher Weise zu Handelsprodukten konfektioniert und entsprechend den Kundenwünschen als Pulver, Paste, Granulate oder Pellets ausgeliefert werden.

Beispielsweise ist aus DE 10 2004 026 955 A1 ein durch Verdüsung von flüssigem Aluminium hergestellter Aluminiumgrieß für korrosionsstabile dünne deckende Aluminiumpigmente bekannt. Die Grießpartikeln mit einem mittleren Durchmesser von unter 10 $\mu$m können eine runde, kugelförmige bis ellipsoide oder spratzige Form aufweisen. Dieser bekannte Aluminiumgrieß wird insbesondere für die Herstellung von korrosionsstabilen Aluminiumpigmenten mit einer Schichtdicke von bis zu 50 nm und einer relativen Breite der Dickenverteilung von 70% - 140% eingesetzt.

Weiterhin betrifft DE 103 31 785 A1 ein Verfahren zur Herstellung eines feinen duktilen Metallpulvers mit einem mittleren Partikeldurchmesser $D_{50}$ von höchstens 25 $\mu$m. Dieses Metallpulver wird aus einem sphärische oder spratzige Pulverpartikel enthaltenden Metallpulver mittels eines Deformationsschritt und einer anschließenden Zerkleinerungsmahlung mit Mahlhiffsmitteln hergestellt. Dieser bekannte Metallgrieß ist kein den Erfindungsgegenstand betreffender Metallsprühgrieß.

Aus DE 693 06 789 T2 ist ein Metallpulverpigment aus polierten, vorzugsweise im Wesentlichen fein gemahlenen Pigmentteilchen aus Aluminium oder Aluminiumlegierungen mit einer mittleren Teilchengröße von 1 $\mu$m bis 300 $\mu$m bekannt. Die Herstellung dieses bekannten Metallpulverpigmentes erfolgt durch eine Zerkleinerungsvermahlung von Metall wie beispielsweise Aluminium.

In der DE-OS 23 14 874 ist die Herstellung eines Pulvers aus reflektierenden Aluminium-Blättern (Aluminiumpigmenten) durch Vermahlung eines auch nach dem Sprühverfahren herstellbaren sphärolithischen Pulvers mit einer Teilchengröße von 4. bis 300 $\mu$m beschrieben. Dieses Pulver näher charakterisierende Angaben sind der Druckschrift nicht zu entnehmen.

Die EP 1 621 586 A1 offenbart durch Naßmahlung erhaltene Aluminiumeffektpigmente im Dickenbereich der PVD-Pigmente mit einer mittleren Dicke von 25 bis 80 nm und einer mittleren Größe von 8 bis 30 $\mu$m. Diese Pigmente weisen jedoch nachteiligerweise nicht die optischen Eigenschaften von PVD-Pigmenten auf.

Schließlich betrifft EP 1 080 810 B1 ein Aluminiumpigment, welches durch Nassvermahlung von Aluminiumstaub hergestellt wurde. Der auch als Verdüsungsprodukt zur Pigmentherstellung eingesetzte, eine mittlere Teilchengröße von 2-10 $\mu$m aufweisende Aluminiumstaub ist nicht näher beschrieben.

Die EP 1 424 371 A1 offenbart durch Vermahlung von Aluminiumpulver erhaltene Aluminiumeffektpigmente. Gemäß der Lehre der EP 1 424 371 A1 weist das eingesetzte Aluminiumpulver eine durchschnittliche Partikelgröße ($D_{50}$) im Bereich von 1 bis 10 $\mu$m auf.

WO2004/087816 offenbart plättchenförmige Al-Pigmente mit einer mittleren Dicke (h50) von 30-100 nm, einer relativen Breite der Dickenverteilung (dh) von 70-140% hergestellt durch vermahlen von Aluminiumgriess mit einer mittleren Partikelgrösse von unter 10 $\mu$m.

EP1211003 offenbart ein Verfahren zur Herstellung von feinem Aluminiumgriess durch Versprühen einer Aluminiumschmelze in eine Inertgasatmosphäre und dem Auffangen der erhaltenen Partikel.

Nachteiligerweise weisen diese Pigmente gemäß der EP 1 621 586 A1, EP 1 080 810 B1 und der EP 1424 371 A1 eine sehr breite relative Dickenverteilung auf, was zu Qualitätseinbußen in Bezug auf die Glanzeigenschaften eines unter Verwendung dieser Pigmente lackierten oder bedruckten Gegenstandes führt.

Aufgabe der Erfindung ist es, einen Aluminiumsgrieß für die Nassvermahlung zu plättchenförmigen Pigmenten, die Dicken und Dickenverteilungen ähnlich wie PVD-Aluminiumpigmente aufweisen sollen, bereitzustellen. Dieser Aluminiumgrieß soll - gegenüber den bekannten Aluminiumgrießen - vorteilhafte Eigenschaften, insbesondere hinsichtlich Kornband aufweisen.

Eine weitere Aufgabe der Erfindung ist es, ein einfaches Verfahren zur Herstellung von Aluminiumgrieß zur Verfügung zu stellen.

Eine weitere Aufgabe ist es, ein Lasermarkierungsmittel bereitzustellen, welches Lasermarkierungen mit hoher Abbildeschärfe, höchster Punktgenauigkeit auch bei sehr schnellen Laserschreibgeschwindigkeiten ermöglicht. Das Lasermarkierungsmittel soll keinerlei Fließlinien im Kunststoff verursachen oder sichtbar machen, aus nicht-toxischen Materialien bestehen und nicht opakisierend sein.

Die der Erfindung zugrundeliegende Aufgabe wird durch Bereitstellung eines Aluminiumgrieß mit einer Korngrößenverteilung mit einem $d_{10}$-Wert von 0,15 bis 3,0 $\mu$m, einem $d_{50}$-Wert von 0,8 bis 5,0 $\mu$m und einem $d_{90}$-Wert von 2,0 bis 8,0 $\mu$m, gelöst.

Der erfindungsgemäße Aluminiumgrieß besteht mithin aus Aluminiumpartikeln, die in der Summe die vorgenannte Korngrößenverteilung erfüllen.

Bevorzugte Weiterbildungen des erfindungsgemäßen Aluminiumgrießes sind in den Unteransprüchen 2 bis 4 angegeben.

Die der Erfindung zugrunde liegende Aufgabe wird weiterhin durch ein Verfahren gemäß Anspruch 5 zur Herstellung eines Aluminiumgrießes gelöst, wobei das Verfahren die folgenden Schritte umfaßt:

(a) Zerstäuben einer flüssigen Aluminiumschmelze unter Erhalt von Aluminiumpartikeln
(b) Sammeln der in Schritt (a) erhaltenen Aluminiumpartikeln unter Erhalt von Aluminiumgrieß und
(c) Klassieren des in Schritt (b) gesammelten Aluminiumgrieß.

Bevorzugte Weiterbildungen des erfindungsgemäßen Verfahrens sind in den Unteransprüchen 6 bis 8 angegeben.

Weitere Erfindungsgegenstände betreffen die in den Ansprüchen 9 bis 15 beanspruchte Verwendung von Aluminiumgrieß als Lasermarkierungsmittel oder Laserschweißbarkeitsmittel für Kunststoffe.

Im Sinne der Erfindung werden als Aluminiumgrieße Grießqualitäten mit einem mittleren Korndurchmesser $d_{50}$ von unter 5 $\mu$m bezeichnet. Vorzugsweise weist der Aluminiumgrieß einen mittleren Korndurchmesser $d_{50}$ von unter 4 $\mu$m, weiter bevorzugt von unter 3 $\mu$m auf.

Im Sinne der Erfindung wird der Begriff Korn synonym mit dem Begriff Partikel verwendet. Mit dem Begriff Korngrößenverteilung bzw. Kornband wird vorliegend die Größenverteilung der Aluminiumpartikel bezeichnet. Die Aluminiumpartikel zusammen werden als Aluminiumgrieß bezeichnet.

Der erfindungsgemäße Aluminiumgrieß hat bevorzugt eine sphärische, vorzugsweise eine weitgehend runde Form. Besonders bevorzugt werden Grieße mit einer kugelförmigen bis leicht ellipsoiden Form.

Das Verhältnis des längsten zum kürzesten Durchmesser der sphärischen Form eines Aluminiumgrießpartikels beträgt bevorzugt im Mittel 1,2 bis 1,0. Bei einem Verhältnis von 1,0 bis 1,2 sind die Aluminiumpartikel in etwa kugelförmig bzw. leicht ellipsoid, was sowohl bei der Herstellung von plättchenförmigen Aluminiumpigmenten, sogenannten Aluminiumeffektpigmenten, als auch bei der Verwendung als Lasermarkierungsmittel oder Laserschweißbarkeitsmittel von großem Vorteil ist.

Bei der Herstellung von Aluminiumeffektpigmenten durch Verformungsbehandlung aus Aluminiumgrieß mit diesen Größenverhältnissen entstehen Aluminiumeffektpigmente mit einem in etwa kreisförmigen Umfang und mithin Aluminiumeffektpigmente vergleichbarer Güte insbesondere im Hinblick auf die Dicke und geringe Dickenverteilung.

Bei Verwendung des erfindungsgemäßen Aluminiumgrieß als Lasermarkierungsmittel oder Laserschweißbarkeitsmittel werden bei diesen Größenverhältnissen hohe Abbildeschärfen bzw. genaue Schweißpunkte ermöglicht.

Aluminiumgrieß besitzt eine Korngrößenverteilung, die gewöhnlich ungefähr die Form einer log-Normalverteilung aufweist. Die Größenverteilung wird üblicherweise mittels Lasergranulometrie bestimmt.

Bei dieser Methode können die Metallpartikel in Form eines Pulvers vermessen werden. Die Streuung des eingestrahlten Laserlichtes wird in verschiedene Raumrichtungen erfasst und gemäß der Fraunhofer Beugungstheorie mittels einer Software (Windox, Version 5, Release 5.1) ausgewertet. Dabei werden die Partikel rechnerisch als Kugeln behandelt. Somit beziehen sich die ermittelten Durchmesser stets auf den über alle Raumrichtungen gemittelten Äquivalentkugeldurchmesser, unabhängig von der tatsächlichen Form der Metallpartikel. Es wird die Größenverteilung ermittelt, die in Form eines Volumenmittels (bezogen auf den Äquivalentkugeldurchmesser) berechnet wird. Diese volumengemittelte Größenverteilung kann u. a. als Summendurchgangskurve dargestellt werden. Die Summendurchgangskurve wiederum wird meist vereinfachend durch bestimmte Kennwerte charakterisiert, z. B. den $d_{50}$- oder $d_{90}$-Wert.

Unter einem $d_{90}$-Wert wird verstanden, dass 90 % aller Partikel unter dem angegebenen Wert liegen. Anders ausgedrückt, liegen 10 % aller Partikel oberhalb des angegebenen Wertes. Bei einem $d_{50}$-Wert liegen 50 % aller Partikel unter und 50 % aller Partikel oberhalb des angegebenen Wertes.

Bevorzugt umfasst die Größenverteilung des Aluminiumgrießes einen $d_{Grieß,10}$-Wert von 0,15 bis 0,6 $\mu$m, einen $d_{Grieß,50}$-Wert von 0,8 $\mu$m bis 2,0 $\mu$m sowie einen $d_{Grieß,90}$-Wert von 2,0 bis 4,0 $\mu$m.

Der eine Untergrenze der Größenverteilung mit den Kenndaten: $d_{Grieß,10} > 0,15$ $\mu$m, $d_{Grieß,50} > 0,8$ $\mu$m und $d_{Grieß,90} > 2,0$ $\mu$m aufweisende Aluminiumgrieß ist mithin überwiegend kein Aluminiumgrieß in nanometrischen Dimensionen.

Der erfindungsgemäße Aluminiumgrieß weist vorzugsweise einen Sauerstoffgehalt von 0,3 Gew.-% bis 1,2 Gew.-% und bevorzugt von 0,4 Gew.-% bis 0,8 Gew.-% auf. Die Angabe Gew.-% bezieht sich dabei das Gesamtgewicht des Aluminiumgriesses. Es wird vermutet, dass sich der geringe Sauerstoffgehalt vorteilhaft in Bezug auf eine leichte Verformbarkeit und auf einen leichten Wärmetransfer auf einen umgebenden Kunststoff auswirkt. Der Sauerstoffgehalt ist durch die sich natürlich ausbildende Oxidschicht bedingt.

Der erfindungsgemäße Aluminiumgrieß weist aus diesem Grunde weiterhin einen sehr geringen Oxidgehalt auf. Der Gehalt an Aluminiumoxid im Aluminiumgrieß wird durch Aufschmelzen des Aluminiumgrießes mit Kohlenstoff und Bestimmung des dabei entstehenden Kohlenmonoxids mittels eines handelsüblichen Gerätes (z.B. Omat 3500 der Fa. JUWE GmbH) bestimmt. Der Gehalt an Aluminiumoxid im Aluminiumgrieß beträgt vorzugsweise weniger als 5 Gew.-%, bevorzugt weniger 1,5 Gew.-% und besonders bevorzugt weniger 1,0 Gew.-% bezogen auf den Grieß.

Um diese geringen Oxidgehalte zu erzielen wird der Zerstäubungsschritt, beispielsweise in Form einer Verdüsung bevorzugt unter Inertgasatmosphäre durchgeführt. Als Inertgase werden vorzugsweise Stickstoff und/oder Helium eingesetzt.

Die Reinheit des bei der Zerstäubung oder Verdüsung verwendeten Aluminiums beträgt vorzugsweise 99,0 bis über 99,9 Gew.-%, bezogen auf das Gesamtgewicht des Aluminiums. Der Grieß kann in entsprechend geringen Mengen die üblichen Legierungsbestandteile (z.B. Mg, Si, Fe) enthalten.

Unterhalb einer Reinheit von 99,0 Gew.-% ist der Aluminiumgrieß nicht duktil genug, um zur Herstellung ultradünner Aluminiumpigmente geeignet zu sein.

Die Fülldichte des erfindungsgemäßen Aluminiumgrießes beträgt vorzugsweise 0,4 - 0,8 g/cm$^3$.

Der Aluminiumgrieß wird bevorzugt in "Atomizern" durch Verdüsung von flüssigem Aluminium hergestellt. Dabei wird die Aluminiumschmelze unter Druck, vorzugsweise unter Verwendung von Inertgas, vorzugsweise durch Düsen, zerstäubt oder versprüht unter Bildung von Aluminiumpartikeln. Der sphärische Grieß ist ein sehr feiner Aluminiumgrieß mit einer sehr engen Größenverteilung.

Der Grieß kann nach dem Zerstäubungsschritt oder Verdüsungsschritt durch entsprechende Klassierungsschritte auf eine gewünschte schmale Größenverteilung gebracht werden. Die Klassierung kann mit Windsichtern, Zyklonen und anderen bekannten Vorrichtungen durchgeführt werden. Der Aluminiumgrieß kann bei Bedarf - vorzugsweise vor dem Klassieren - gemischt und/oder homogenisiert werden.

Überraschenderweise hat sich herausgestellt, dass man mit einem derart feinen Aluminiumgrieß, der zudem eine sehr enge Größenverteilung aufweist, plättchenförmige Aluminiumpigmente herstellen kann, die hinsichtlich ihrer mittleren Dicken und ihrer Dickenverteilungen beinahe jenen von PVD-Pigmenten entsprechen, in der Herstellung jedoch wesentlich kostengünstiger sind.

Die mit dem erfindungsgemäßen Aluminiumgrieß herstellbaren plättchenförmigen Aluminiumpigmente weisen eine, über Dickenauszählung mit Rasterelektronenmikroskopie ermittelte, mittlere Dicke $h_{50}$ von 15 bis 75 nm und eine relative Breite der Dickenverteilung $\Delta h$, welche anhand der entsprechenden Summendurchgangskurve der relativen Häufigkeiten nach der Formel $\Delta h = 100 \times (h_{90} - h_{10}) / h_{50}$, berechnet wird, von 30% bis weniger als 70%, auf.

Bei der aus dem Ergebnis der Dickenauszählung mit Rasterelektronenmikroskopie ($h_{50}$-Wert der Summendurchgangsverteilung) berechneten mittleren Dicke $h_{50}$ der erfindungsgemäßen Aluminiumpigmente wurde eine mittlere Dicke $h_{50}$ von 15 bis 75 nm, bevorzugt von 18 bis 70 nm, besonders bevorzugt von 25 bis 60 nm und ganz besonders bevorzugt von 30 bis 55 nm ermittelt.

Unterhalb einer mittleren Dicke von 15 nm werden die Pigmente zu dunkel, was auf den Verlust des metallischen Reflexionsvermögens unter Beibehaltung der hohen Absorptionseigenschaften des Aluminiums zurückzuführen ist. Außerdem werden die mechanischen Eigenschaften des Aluminiums in ungünstiger Weise verändert: die Pigmente werden zu brüchig. Oberhalb einer mittleren Dicke von 75 nm sind die Pigmente zu dick im Vergleich zu PVD-Pigmenten und die vorteilhaften optischen Eigenschaften werden zunehmend beeinträchtigt.

Die aus dem erfindungsgemäßen Aluminiumgrieß hergestellten plättchenförmigen Aluminiumpigmente weisen vorzugsweise eine relative Breite der Dickenverteilung Δh von 30% bis weniger als 70%, bevorzugt von 35% bis 67%, weiter bevorzugt von 40% bis 65% und besonders bevorzugt von 40% bis 60% auf.

Oberhalb eines Δh von 70% waren die vorteilhaften Eigenschaften der Aluminiumpigmente nicht mehr zu beobachten. Insbesondere der hohe, mit demjenigen von PVD-Pigmente vergleichbare, Glanz von sogenannten "Rückseitenapplikationen" konnte nicht mehr festgestellt werden. Ferner weisen diese Pigmente mit einem Δh von mehr als 70% beim Bedrucken teilweise Probleme im Transferverhalten auf. Pigmente mit einer relativen Breite der Dickenverteilung Δh von unter 30% konnten bislang nicht hergestellt werden.

Während der Verformungsmahlung werden die Aluminiumgrießpartikel nicht völlig gleichmäßig, sondern einige Partikel stärker verformt, während ein Teil der Grießpartikel erst sehr spät während der Vermahlung verformt wird. Ein Grund hierfür ist auch die Tatsache, dass die Verformungswahrscheinlichkeit eines Partikels von seiner Größe abhängig ist. So besitzen bereits zu Plättchen vorverformte Partikel eine höhere spezifische Fläche als noch unverformter Grieß und demgemäß eine höhere Wahrscheinlichkeit, weiter verformt zu werden. Die Breite der Größenverteilung des Grießes geht somit nicht nur in die Größenverteilung der daraus geformten Aluminiumplättchen ein, sondern auch in die Verteilung der Dickenverteilung. Für schmale Dickenverteilungen muss daher ein Aluminiumgrieß mit entsprechend geringer Größenvarianz verwendet werden.

Die $d_{50}$-Werte der Längenverteilung der Pigmente liegen bevorzugt oberhalb von 3 μm, weiter bevorzugt in einem Bereich von 4 μm bis 50 μm, vorzugsweise von 5 μm bis 45 μm, weiter bevorzugt von 8 μm bis 40 μm, weiter bevorzugt von 10 μm bis 30 μm, noch weiter bevorzugt von 15 μm bis 25 μm.

Weiterhin sind bevorzugt feine Pigmente in einem Größenbereich mit einer Länge von 3 bis 15 μm und besonders bevorzugt 5 bis 12 μm. Derartige Pigmente weisen zudem bevorzugt non-leafing Eigenschaften auf. Sie sind beispielsweise mit Ölsäure als Schmiermittel vermahlen und daher mit dieser Substanz beschichtet. Derartige Pigmente sind insbesondere für sogenannte Rückseitenapplikationen im Druckbereich geeignet.

Bei einer Rückseitenapplikation wird eine transparente Folie mit einer PVD-Pigmente enthaltenden Druckfarbe bedruckt. Betrachtet man nach Härtung der Druckfarbe die Folie durch die nicht bedruckte Rückseite, so nimmt man einen Metallglanz war, der nahezu einem Spiegel gleicht. Bevorzugte Anwendungen dieser Applikationsform sind Scheinwerferblenden.

Im fall von Druckfarben sind die Bindemittelanteile und die Schichtdicken generell sehr viel niedriger als in Lacken. Dies trifft vor allem für Tiefdruckfarben zu. Mit konventionellen Aluminiumpigmenten pigmentierte Tiefdruckfarben weisen einen Festkörpergehalt von ca. 40 Gew.-% auf. Druckfilme hieraus weisen eine Nassfilmschichtdicke von ca. 3 bis 6 μm und eine Trockenfilmschichtdicke von ca. 1,5 bis 3 μm auf. Im Fall von mit PVD-Pigmenten pigmentierten Tiefdruckfarben liegen die Festkörperanteile bei ca.15 bis 20 Gew.-% der gesamten Tiefdruckfarbe. Damit gehen Trockenfilmschichtdicken von vorzugsweise nur 0,5 bis 1,5 μm einher. Bei diesen äußerst geringen Schichtdicken ist insbesondere in der Rückseitenapplikation eine weitgehend gleichförmige planparallele Orientierung der Metallpigmente nötig. Diese konnte bisher nur durch PVD-Pigmente erreicht werden. Die mittels des erfindungsgemäßen Aluminiumgrießes durch Nassmahlung hergestellten plättchenförmigen Metallpigmente weisen eine ähnliche mittlere Teilchendicke sowie eine ähnliche Teilchendickenverteilung auf. Nur derartige Pigmente, die bisher nicht zugänglich waren, können einen mit PVD-Pigmenten vergleichbaren optischen Effekt in der Rückseitenapplikation aufweisen.

Es sind mit diesen Metallpigmenten praktisch keine Unterschiede in der optischen Qualität zu PVD-Pigmenten in Tiefdruckanwendungen festzustellen.

Der erfindungsgemäße Aluminiumgrieß wird unter Verwendung eines Mahlwerks, vorzugsweise einer Kugelmühle oder einer Rührwerkskugelmühle, in Gegenwart von Lösemittel und Schmierstoffen als Mahlhilfsmittel und von Mahlkörpern, die ein Einzelgewicht von 1,2 bis 13 mg aufweisen, vermahlen. Aufgrund der äußerst schonenden Mahlweise dauert diese Mahlung vergleichsweise lang. Die Mahlzeit beträgt bevorzugt 15 bis 100 h und besonders bevorzugt 16 bis 80 h.

Gemäß einer bevorzugten Weiterbildung der Erfindung weisen die Mahlkörper ein Einzelgewicht von 2,0 bis 12,5 mg und besonders bevorzugt von 5,0 bis 12,0 mg auf. Als Mahlkörper werden vorzugsweise sphärische Körper, weiter bevorzugt Kugeln verwendet.

Bevorzugt sind Kugeln mit sehr glatter Oberfläche, möglichst runder Form und weitgehend einheitlicher Größe. Das Kugelmaterial kann aus Stahl, Glas oder keramik, wie z.B. Zirkoniumoxid oder Korund sein. Die Temperaturen während des Mahlvorganges liegen im Bereich von 10°C bis 70°C. Bevorzugt sind Temperaturen in einem Bereich von 25°C bis 45°C.

Besonders bevorzugt sind Kugeln aus Glas und einem mittleren Einzelgewicht von 2,0 bis 12,5 mg.

Die Mahlung kann in einem Lösemittel bei einem Gewichtsverhältnis von Lösemittel zu Aluminiumpartikel von 2,8 bis 10 und bei einem Gewichtsverhältnis der Mahlkugeln zu Aluminiumpartikeln von 20 - 120 und mit Schmierstoffen als Mahlhilfsmittel stattfinden.

Die langen Mahlzeiten führen zu einer Vielzahl von Pigment-Kugel-Stößen. Dadurch wird das Pigment sehr gleichmäßig ausgeformt, wodurch eine sehr glatte Oberfläche und eine sehr enge Dickenverteilung ausgebildet sind.

Bezogen auf die Vermahlung in einer Kugelmühle ist die kritische Drehzahl $n_{krit}$ ein wichtiger Parameter, der angibt, ab wann die Kugeln durch die Zentrifugalkräfte an die Mühlenwand gepresst werden und praktisch keine Mahlung mehr stattfindet:

$$n_{krit} = \sqrt{\frac{g}{2\pi^2} \cdot \frac{1}{D}}$$

wobei D der Trommeldurchmesser
und g die Gravitationskonstante ist.

Die Umdrehungsgeschwindigkeiten der Kugelmühle betragen vorzugsweise 25% bis 68%, weiter vorzugsweise 28 % bis 60 % und besonders bevorzugt 30 % bis unter 50 % und weiterhin besonders bevorzugt 35 % bis 45 % der kritischen Drehzahl $n_{krit}$.

Niedrige Umdrehungsgeschwindigkeiten begünstigen eine langsame Verformung der Aluminiumpartikel. Um eine langsame Verformung zu bewirken, werden bei dem erfindungsgemäßen Verfahren bevorzugt auch leichte Mahlkugeln verwendet.

Mahlkugeln mit einem Einzelgewicht über 13 mg verformen die Aluminiumpartikel zu stark, was zu vorzeitigem Bruch führt. Als Aluminiumpartikel wird vorzugsweise Aluminiumgrieß verwendet.

Im Unterschied zu herkömmlichen Mahlverfahren werden die Aluminiumpartikel bei dem vorliegenden Verfahren zum überwiegenden Anteil nicht vermahlen bzw. zerkleinert, sondern äußerst schonend über einen längeren Zeitraum verformt.

Die oben angeführten Bedingungen führen zu einer sehr schonenden Mahlung, bei der die Aluminiumpartikel langsam ausgeformt werden und Brüche infolge eines Kugelstoßes mit hoher kinetischer Energie vermieden werden.

Als Schmierstoffe können während der Vermahlung eine Vielzahl von Verbindungen verwendet werden.

Hierbei sind die schon seit langer Zeit verwendeten Fettsäuren mit Alkylresten von 10 bis 24 C-Atomen zu nennen. Vorzugsweise werden Stearinsäure, Ölsäure oder Mischungen derselben verwendet. Dabei führt Stearinsäure als Schmiermittel zu leafing-Pigmenten, Ölsäure hingegen zu non-leafing-Pigmenten.

Leafing-Pigmente sind dadurch gekennzeichnet, daß sie in einem Anwendungsmedium, beispielsweise einem Lack oder einer Druckfarbe aufschwimmen, d.h. sich an der Oberfläche des Anwendungsmediums anordnen.

Non-leafing-Pigmente ordnen sich hingegen im Anwendungsmedium an.

Den Fettsäuren können zusätzlich beispielsweise langkettige Aminoverbindungen zugesetzt werden. Die Fettsäuren können tierischen oder auch pflanzlichen Ursprungs sein. Ebenfalls können organische Phosphonsäuren und/oder Phosphorsäureester als Schmiermittel verwendet werden.

Das Schmiermittel sollte nicht in zu geringer Menge eingesetzt werden, da anderenfalls infolge der starken Ausformung der Aluminiumpartikel die sehr großen Oberflächen der hergestellten plättchenartigen Aluminiumpigmente nur ungenügend durch adsorbiertes Schmiermittel abgesättigt werden. In diesem Fall kann es zu Kaltverschweißungen kommen. Typische Mengen sind daher 1 bis 20 Gew.-%, bevorzugt 2 bis 15 Gew.-%, Schmiermittel bezogen auf das eingesetzte Aluminiumgewicht.

Die Wahl des Lösemittel ist an sich unkritisch. Man kann übliche Lösemittel wie Testbenzin, Solvent Naphtha etc. einsetzen. Auch die Verwendung von Alkoholen, wie z.B. Isopropanol, Ether, Ketone, Ester usw. ist möglich.

Bedingt durch das Herstellungsverfahren sind diese Aluminiumpigmente äußerst vorteilhaft frei von anhaftenden Polymerfolien. Daher besitzen diese nicht die Nachteile von noch mit Resten des "release-coats" behafteter Aluminiumpigmente, die durch PVD-Verfahren hergestellt werden. Zudem ist ihre Herstellungsweise billiger als bei der aufwendigen PVD-Herstellung. Die Trennung der hergestellten Aluminiumpigmente von den Mahlkörpern, vorzugsweise Mahlkugeln, kann auf herkömmliche Art und Weise durch Siebung erfolgen.

Nach der Vermahlung der Aluminiumpartikel werden die erhaltenen Aluminiumpigmente von den Mahlkörpern, vorzugsweise den Mahlkugeln, abgetrennt.

In einem weiteren Verfahrensschritt können die erhaltenen Aluminiumpigmente einer Größenklassifikation unterzogen werden. Diese Klassifikation sollte schonend durchgeführt werden, um die dünnen Aluminiumpigmente nicht zu zerstören. Es kann sich dabei beispielsweise um eine Nasssiebung, eine Dekantierung oder auch um eine Trennung durch Sedimentation (infolge der Schwerkraft oder durch Zentrifugieren) handeln.

Bei der Nasssiebung wird i. d. R. der Grobanteil herausgesiebt.

Bei den anderen Verfahren kann insbesondere der Feinstanteil abgetrennt werden.

Anschließend kann die Suspension von überschüssigem Lösemittel, z.B. mit Hilfe einer Filterpresse, Zentrifuge oder eines Filters getrennt werden.

Im letzten Schritt erfolgt eine Weiterverarbeitung zur gewünschten Darreichungsform.

Obwohl die mit dem erfindungsgemäßen Aluminiumgrieß hergestellten Metallpigmente - im Vergleich zu PVD-Pigmenten - eine ähnliche Dicke und eine ähnliche Dickenverteilung aufweisen, sind diese Pigmente überraschenderweise wesentlich einfacher handhabbar. In ihren Darreichungsformen sind diese Aluminiumpigmente vorteilhafter Weise nicht auf die bei PVD-Pigmenten übliche niedrig konzentrierte Dispersionsform beschränkt.

So kann man analog zu konventionellen Aluminiumpigmenten die Pastenform wählen. Der Festkörpergehalt beträgt hierbei 30 bis 65 Gew.-%, bevorzugt 40 bis 60 Gew.-% und besonders bevorzugt 45 bis 55 Gew.-% bezogen auf das Gesamtgewicht der Paste.

Weiterhin können diese Aluminiumpigmente durch Austrocknen in eine Pulverform, vorzugsweise in eine nichtstaubende Pulverform, überführt werden. Das getrocknete Pulver kann durch Zugabe sehr kleiner Mengen Lösemittel, beispielsweise < 10 Gew.-%) oder weniger als 5 Gew.-%, in einem geeigneten Homogenisator zu einem nicht staubenden Metallpulver weiterverarbeitet werden. Auch kann der Filterkuchen zunächst ausgetrocknet und anschließend mit einem anderen Lösemittel wieder angepastet werden, was auch als sogenanntes Umnetzen bezeichnet wird.

Die mit dem erfindungsgemäßen Aluminiumgrieß hergestellten Aluminiumpigmente finden Verwendung in Coatings, Lacken, Druckfarben, Pulverlacken, Kunststoffen und kosmetischen Formulierungen.

Weiterhin hat sich überraschenderweise gezeigt, dass der erfindungsgemäße ultrafeine Aluminiumgrieß besonders vorteilhaft als Lasermarkierungsmittel für transparente Kunststoffmaterialien verwendbar ist. Die aus dem erfindungsgemäßen Aluminiumgrieß bestehenden Lasermarkierungsmittel ermöglichen eine Markierung von transparenten Kunststoffmaterialien mit gutem Kontrast, hoher Punktgenauigkeit bei schlierenfreier Einarbeitung. Vorzugsweise soll ein guter Kontrast erhalten werden, ohne dabei die Kunststoffmaterialien zwangsläufig einfärben zu müssen. Zudem sind Lasermarkierungsmittel aus Aluminiumgrieß toxikologisch unbedenklich, außerdem preisgünstig und stehen dem Markt in großen Mengen zur Verfügung. Diese Lasermarkierungsmittel ermöglichen außerordentlich abbildungsscharfe Kennzeichnungen mit hoher Punktgenauigkeit nach Einstrahlung von Laserlicht.

Es wird vermutet, dass durch die Verwendung des erfindungsgemäßen, äußerst feinen Aluminiumgrießes aufgrund dessen hoher spezifischer Oberfläche die Laserlichtabsorption und nachfolgend die Energieabgabe in die Umgebung des Metallgrießes in besonders definierter, örtlich eng begrenzter Weise erfolgt. Daher weisen die Lasermarkierungen entsprechend pigmentierter Kunststoffe die genannte Vorteile auf.

Bei dem sehr feinen erfindungsgemäßen Aluminiumgrieß wurde überraschenderweise gefunden, dass Lasermarkierungen mit hohem Kontrast und Punktgenauigkeit bei sehr hohen Schreibgeschwindigkeiten des Lasers erhalten werden können. Die Schreibgeschwindigkeiten des Lasers reichen von 120 bis ca. 10.000 mm/s, bevorzugt von 150 bis 8.000 mm/s, besonders bevorzugt von 200 bis 2.000 mm/s und ganz besonders bevorzugt von 230 bis 1.000 mm/s. Hierbei ist die im einzelnen erreichbare Schreibgeschwindigkeit abhängig von vielen Parametern, insbesondere jedoch von der Laserleistung und der Impulsfrequenz. Dies bringt im Hinblick auf die Durchsatzraten bei der Lasermarkierung von Objekten erhebliche Zeitvorteile mit sich.

Nach Einstrahlung eines Laserstrahls in einen Kunststoff, der den erfindungsgemäßen Aluminiumgrieß als Lasermarkierungsmittel enthält, kommt es nach Einstrahlung eines Laserstrahls zu einer selektiven Erhitzung der mikroskaligen Aluminiumpartikel, Übertragung der Wärme auf den umgebenden Kunststoff und infolge des hiermit verbundenen thermisch induzierten Polymerabbaus zu einer Carbonisierung und/oder zu einem Aufschäumen der die Aluminiumpartikel umgebenden Polymere in der Kunststoffmatrix. In Abhängigkeit von der Art des verwendeten Polymers und/oder in Abhängigkeit von dem Energieeintrag durch den Laserstrahl kommt es zu einer Carbonisierung und/oder zu einem Aufschäumen.

Eine Carbonsierung führt zu einer Schwarzeinfärbung; ein Aufschäumen führt zu einer Aufhellung; die bis zu einer Art Weißeinfärbung reichen kann. In den meisten Fällen ist ein deutlicher Kontrast zum nichtmarkierten Kunststoff erwünscht.

Bei weiteren Ausführungsformen jedoch kann die durch den thermisch induzierten Polymerabbau hervorgerufen Änderung im Kunststoff so gering sein, dass sie nicht oder nur unwesentlich mit dem menschlichen Auge wahrgenommen werden können. Derartige Markierungen können jedoch durch spezielle Lesegräte detektiert werden. Daher können derartige im wesentlichen unsichtbare Lasermarkierungen z.B. für Sicherheitsmarkierungen oder für die Beschriftung von CDs Verwendung finden.

Da die Carbonisierung und/oder das Aufschäumen nur lokal um die mikroskaligen Aluminiumpartikel herum erfolgt, kann eine Markierung mit hoher Punktgenauigkeit erfolgen. Eine hohe Abbildungsschärfe macht sich unter anderem dadurch bemerkbar, dass ein Strich nicht als Ansammlung von einzelnen Punkten wahrgenommen wird, sondern als durchgehender gerader Strich, der aus einer Vielzahl kleiner, für das menschliche Auge nicht auflösbarer Punkte zusammengesetzt ist.

Es hat sich mithin als äußerst überraschend herausgestellt, dass - obwohl die Wechselwirkung des Aluminiumgrieß mit sichtbarem Licht nicht stark genug ist, um zu einer Vergrauung oder Trübung eines Kunststoffmaterials zu führen - die Wechselwirkung mit eingestrahltem Laserlicht jedoch ausreichend ist, um die gewünschte Carbonisierung und/oder das gewünschte Aufschäumen der die Aluminiumpartikel umgebenden Polymermatrix zu erzeugen und mithin den Kunststoffgegenstand mit einer kontrastreichen Kennzeichnung oder Markierung zu versehen.

Die in dem erfindungsgemäßen mikroskaligen Aluminiumgrieß enthaltenen Aluminiumpartikel sind aufgrund ihrer sehr hohen Absorptionseigenschaften für elektromagnetische Strahlung vom UV- bis hin zum IR-Bereich sowie ihrer ausgezeichneten Wärmeleitfähigkeit besonders gut als Lasermarkierungs- und/oder Laserschweißbarkeitsmittel geeignet. Sie übertreffen herkömmliche metalloxidische Partikel in ihrer diesbezüglichen Wirksamkeit.

Der lasermarkierbare Kunststoff umfasst vorzugsweise thermoplastische, duroplastische oder elastomere Kunststoffe. Besonders bevorzugt sind hierbei thermoplastische Kunststoffe.

Als thermoplastische Polymere kommen alle dem Fachmann bekannten Thermoplaste in Betracht. Geeignete thermoplastische Polymere werden beispielsweise im Kunststoff-Taschenbuch, Hrsg. Saechtling, 25. Ausgabe, Hanser-Verlag, München, 1992, insbesondere Kapitel 4 sowie darin zitierte Verweise, und im Kunststoff-Handbuch, Hrsg. G. Becker und D. Braun, Bände 1 bis 11, Hanser-Verlag, München, 1966 bis 1996, beschrieben.

Exemplarisch seien als geeignete Thermoplaste genannt: Polyoxyalkylene, Polycarbonate (PC), Polyester wie Polybutylenterephthalat (PBT) oder Polyethylenterephthalat (PET), Polyolefine wie Polyethylen oder Polypropylen (PP), Poly(meth)acrylate, Polyamide, vinylaromatische (Co)polymere wie Polystyrol, schlagzähmodifiziertes Polystyrol wie HI-PS, oder ASA-, ABS- oder AES-Polymerisate, Polyarylenether wie Polyphenylenether (PPE), Polysulfone, Polyurethane, Polylactide, halogenhaltige Polymerisate, imidgruppenhaltige Polymere, Celluloseester, Silicon-Polymere und thermoplastische Elastomere. Es können auch Mischungen unterschiedlicher Thermoplaste als Materialien für die Kunststoffformteile eingesetzt werden. Bei diesen Mischungen kann es sich um ein- oder mehrphasige Polymerblends handeln.

Die zu beschriftenden oder miteinander zu verbindenden Kunststoffe können aus identischen oder verschiedenen Thermoplasten bzw. Thermoplast-Blends bestehen.

Polyoxyalkylenhomo- oder -copolymerisate, insbesondere (Co)polyoxymethylene (POM), und Verfahren zu deren Herstellung sind dem Fachmann an sich bekannt und in der Literatur beschrieben. Geeignete Materialien sind im Handel unter der Markenbezeichnung Ultraform® (BASF AG, Deutschland) erhältlich. Ganz allgemein weisen diese Polymere mindestens 50 Mol-% an wiederkehrenden Einheiten -CH$_2$O-in der Polymerhauptkette auf. Die Homopolymeren werden im allgemeinen durch Polymerisation von Formaldehyd oder Trioxan hergestellt, vorzugsweise in der Gegenwart von geeigneten Katalysatoren. Bevorzugt sind Polyoxymethylencopolymere und Polyoxymethylenterpolymerisate. Die bevorzugten Polyoxymethylen(co)polymere haben Schmelzpunkte von mindestens 150°C und Molekulargewichte (Gewichtsmittelwert) M im Bereich von 5.000 bis 200.000, vorzugsweise von 7.000 bis 150.000 g/mol. Endgruppenstabilisierte Polyoxymethylenpolymerisate, die an den Kettenenden C-C-Bindungen aufweisen, werden besonders bevorzugt.

Geeignete Polycarbonate sind an sich bekannt und sind z.B. gemäß DE-B-1 300 266 durch Grenzflächenpolykondensation oder gemäß DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen als Bisphenol A bezeichnet. Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan). Geeignete Polycarbonate sind im Handel unter der Markenbezeichnung Lexan® (GE Plastics B.V., Holland) erhältlich.

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C$_1$-C$_4$-Alkylgruppen wie Methyl-, Ethyl-, i- bzw. n-Propyl- und n-, i- bzw. tert.-Butylgruppen. Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden. Als bevorzugte Dicarbonsäuren sind Naphthalindicarbonsäure, Terephthalsäure und Isophthalsäure oder deren Mischungen zu nennen. Bis zu 10 mol% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden. Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexaridiol und Neopentylglykol oder deren Mischungen bevorzugt. Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat (PET), Polyethylennaphthalat und Polybutylenterephthalat (PBT) bevorzugt. Diese Produkte sind im Handel z.B. unter den Markenbezeichnungen Rynite® (PET; Fa. DuPont, USA) bzw. Ultradur® (PBT; BASF AG) erhältlich. Die Viskositätszahl der Polyester liegt im allgemeinen im Bereich von 60 bis 200 ml/g (gemessen in einer 0,5 gew.-%igen Lösung in einem Phenol/o-Dichlorbenzol-Gemisch (Gew.-Verh. 1:1 bei 25°C)).

Geeignete Polyolefine stellen ganz allgemein Polyethylen und Polypropylen sowie Copolymerisate auf der Basis von Ethylen oder Propylen, ggf. auch mit höheren α-Olefinen, dar. Entsprechende Produkte sind z.B. unter den Handelsnamen Lupolen® bzw. Novolen® erhältlich. Unter Polyolefinen sollen auch Ethylen-Propylen-Elastomere und Ethylen-Propylen-Terpolymere verstanden werden.

Unter den Poly(meth)acrylaten sind insbesondere Polymethylmethacrylat (PMMA) sowie Copolymere auf der Basis von Methylmethacrylat mit bis zu 40 Gew.-% weiterer copolymerisierbarer Monomeren, wie n-Butylacrylat, t-Butylacrylat oder 2-Ethylhexylacrylat, zu nennen, wie sie beispielsweise unter den Bezeichnungen Lucryl® (BASF AG) oder Plexiglas® (Röhm GmbH, Deutschland) erhältlich sind. Im Sinne der Erfindung sind hierunter auch schlagzähmodifizierte Poly(meth)acrylate sowie Mischungen aus Poly(meth)acrylaten und SAN-Polymerisaten, die mit Polyacrylatkautschuken schlagzäh modifiziert sind (z.B. das Handelsprodukt Terlux® der BASF AG), zu verstehen.

Als Polyamide sind solche geeignet mit aliphatischem teilkristallinen oder teilaromatischen oder amorphem Aufbau jeglicher Art und deren Blends, einschließlich Polyetheramiden wie Polyetherblockamiden. Unter Polyamiden sollen alle bekannten Polyamide verstanden werden. Geeignete Polyamide weisen im allgemeinen eine Viskositätszahl von 90 bis 350, vorzugsweise 110 bis 240 ml/g auf (bestimmt in einer 0,5 Gew.-%-igen Lösung in 96 Gew.-%-iger Schwefelsäure bei 25°C gemäß ISO 307). Halbkristalline oder amorphe Harze mit einem Molekulargewicht (Gewichtsmittelwert) von mindestens 5.000 g/mol, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure, Dodecandisäure (= Decandicarbonsäure) und und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di- (4-aminocyclohexyl)-propan.

Bevorzugte Polyamide sind Polyhexamethylenadipinsäureamid (PA 66), z.B. das Handelsprodukt Ultramid® A (BASF AG), und Polyhexamethylensebacinsäureamid (PA 610), z.B. das Handelsprodukt Nylon® 610 (Fa. DuPont), Polycaprolactam (PA 6), z.B. das Handelsprodukt Ultramid® B (BASF AG) sowie Copolyamide 6/66, insbesondere mit einem Anteil von 5 bis 95 Gew.-% an Caprolactam-Einheiten, z.B. das Handelsprodukt Ultramid® C (BASF AG). PA 6, PA 66 und Copolyamide 6/66 sind besonders bevorzugt.

Außerdem seien auch noch Polyamide erwähnt, die z.B. durch Kondensation von 1,4-Diaminobutan mit Adipinsäure unter erhöhter Temperatur erhältlich sind (Polyamid-4, 6). Herstellungsverfahren für Polyamide dieser Struktur sind z.B. in den EP-A 38 094, EPA 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Die Herstellung der teilaromatischen Copolyamide mit niedrigem Triamingehalt kann nach den in den EP-A 129 195 und 129 196 beschriebenen Verfahren erfolgen.

Weitere geeignete thermoplastische Materialien stellen vinylaromatische (Co)polymere dar. Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000 g/mol.

Nur stellvertretend seien hier vinylaromatische (Co)polymere aus Styrol, Chlorstyrol, α-Methylstyrol und p-Methylstyrol genannt; in untergeordneten Anteilen, vorzugsweise nicht mehr als 20, insbesondere nicht mehr als 8 Gew.-%, können auch Comonomer wie (Meth)acrylnitril oder (Meth)acrylsäureester am Aufbau beteiligt sein. Besonders bevorzugte vinylaromatische (Co)polymere sind Polystyrol, Styrol-Acrytnitril-Copolymere (SAN) und schlagzähmodifiziertes Polystyrol (HIPS = High Impact Polystyrene). Es versteht sich, dass auch Mischungen dieser Polymeren eingesetzt werden können. Die Herstellung erfolgt vorzugsweise nach dem in EP-A-302 485 beschriebenen Verfahren.

Weiterhin sind ASA-, ABS- und AES-Polymerisate (ASA = Acrylnitril-Styrol-Acrylester, ABS = Acrylnitril-Butadien-Styrol, AES = Acrylnitril-EPDM-Kautschuk-Styrol) besonderes bevorzugt. Diese schlagzähen vinylaromatischen Polymere enthalten mindestens ein kautschukelastisches Pfropfpolymerisat und ein thermoplastisches Polymerisat (Matrixpolymerisat). Als Matrixmaterial wird im allgemeinen auf ein Styrol/Acrylnitril-Polymerisat (SAN) zurückgegriffen. Bevorzugt werden Pfropfpolymerisate verwendet, die als Kautschuk

- einen Dienkautschuk auf Basis von Dienen, wie z.B. Butadien oder Isopren, (ABS);
- einen Alkylacrylatkautschuk auf Basis von Alkylestern der Acrylsäure, wie n-Butylacrylat und 2-Ethylhexylacrylat, (ASA);
- einen EPDM-Kautschuk auf Basis von Ethylen, Propylen und einem Dien, (AES);

oder Mischungen dieser Kautschuke bzw. Kautschukmonomeren enthalten.

Die Herstellung von geeigneten ABS-Polymerisaten findet sich z.B. in der deutschen Patentanmeldung DE-A 19728629 eingehend beschrieben. Für die Herstellung von ASA-Polymerisaten kann z.B. auf die EP-A 99 532 zurückgegriffen werden. Angaben über die Herstellung von AES-Polymerisaten sind beispielsweise in der US 3,055,859 oder in der US 4,224,419 offenbart. Auf die in diesem Absatz genannten Patentschriften wird hiermit ausdrücklich Bezug genommen.

Unter Polyarylenethern sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Polyphenylenether sind unter der Bezeichnung Noryl® (GE Plastics B.V., Holland) kommerziell erhältlich.

Im allgemeinen weisen die Polyarylenether mittlere Molekulargewichte M (Zahlenmittel) im Bereich von 10.000 bis 60.000 g/mol und Viskositätszahlen von 30 bis 150 ml/g auf. Die Viskositätszahlen werden je nach Löslichkeit der Polyarylenether entweder in 1 Gew.-%iger N-Methylpyrrolidon-Lösung, in Mischungen aus Phenol und o-Dichlorbenzol oder in 96%-iger Schwefelsäure bei jeweils 20°C bzw. 25°C gemessen.

Die Polyarylenether sind an sich bekannt oder können nach an sich bekannten Methoden hergestellt werden.

Bevorzugte Verfahrensbedingungen zur Synthese von Polyarylenethersulfonen oder -ketonen sind beispielsweise in der EP-A 113 112 und EP-A 135 130 beschrieben. Polyarylenethersulfone weisen in der Regel einen Schmelzpunkt von mindestens 320°C, Polyarylenetherketone von mindestens 370°C auf. Geeignete Polyphenylenethersulfone sind z.B. unter der Bezeichnung Ultrason® E (BASF AG), geeignete Polyphenylenethterketone unter der Bezeichnung Victrex® im Handel erhältlich.

Des Weiteren sind Polyurethane, Polyisocyanurate und -Polyharnstoffe geeignete Materialien für die Herstellung von lasermarkierbaren Kunststoffformteile unter Verwendung des erfindungsgemäßen Aluminiumgrieß. Weiche, halbharte oder harte, thermoplastische oder vernetze Polyisocyanat-Polyadditionsprodukte, beispielsweise Polyurethane, Polyisocyanurate und/oder Polyharnstoffe, insbesondere Polyurethane, sind allgemein bekannt und im Handel u. a. unter der Bezeichnung Elastolan® (Elastogran GmbH, Deutschland) erhältlich. Ihre Herstellung ist vielfältig beschrieben und erfolgt üblicherweise durch Umsetzung von Isocyanaten mit gegenüber Isocyanaten reaktiven Verbindungen bei allgemein bekannten Bedingungen. Bevorzugt wird die Umsetzung in Gegenwart von Katalysatoren und/oder Hilfsstoffen durchgeführt. Wenn es sich um geschäumte Polyisocyanat-Polyadditionsprodukte handelt, so werden diese in Gegenwart von üblichen Treibmitteln hergestellt.

Als Isocyanate kommen die an sich bekannten aromatischen, arylaliphatischen, aliphatischen und/oder cycloaliphatischen organischen Isocyanate, bevorzugt Diisocyanate in Frage.

Als gegenüber Isocyanaten reaktive Verbindungen können beispielsweise allgemein bekannte Verbindungen mit einem Molekulargewicht von 60 bis 10.000 g/mol und einer Funktionalität gegenüber Isocyanaten von 1 bis 8, bevorzugt 2 bis 6 eingesetzt werden (im Falle von thermoplastischen Polyurethanen TPU Funktionalität ca. 2), beispielsweise Polyole mit einem Molekulargewicht von 500 bis 10.000 g/mol, z.B. Polyetherpolyole, Polyesterpolyole, Polyetherpolyesterpolyole, und/oder Diole, Triole und/oder Polyole mit Molekulargewichten kleiner 500 g/mol.

Polylactide, also Polymere der Milchsäure, sind an sich bekannt oder können nach an sich bekannten Verfahren hergestellt und ebenfalls in Verbindung mit dem erfindungsgemäßen Aluminiumgrieß in lasermarkierbarer Form werden. Neben Polylactid können auch Co- oder Blockcopolymere auf der Basis von Milchsäure und weiteren Monomeren verwendet werden. Meist werden lineare Polylactide eingesetzt. Es können aber auch verzweigte Milchsäurepolymerisate verwendet werden. Als Verzweiger können z.B. mehrfunktionelle Säuren oder Alkohole dienen.

Als geeignete halogenhaltige Polymerisate sind insbesondere Polymerisate des Vinylchlorids zu nennen, insbesondere Polyvinylchlorid (PVC) wie Hart-PVC und Weich-PVC, und Copolymerisate des Vinylchlorids wie PVC-U-Formmassen.

Weiterhin kommen fluorhaltige Polymere in Betracht, insbesondere Polytetrafluorethylen (PTFE), Tetrafluorethylen-PerfluorpropylenCopolymere (FEP), Copolymere des Tetrafluorethylens mit Perfluoralkylvinylether, Ethylen-Tetrafluorethylen-Copolymere (ETFE) Polyvinylidenfluorid (PVDF), Polyvinylfluorid (PVF), Polychlortrifluorethylen (PCTFE), und Ethylen-Chlortrifluorethylen-Copolymere (ECTFE).

Imidgruppenhaltige Polymere sind insbesondere Polyimide, Polyetherimide, und Polyamidimide.

Geeignete Celluloseester sind etwa Celluloseacetat, Celluloseacetobutyrat, und Cellulosepropionat.

Daneben kommen auch Silicon-Polymere als Thermoplaste in Betracht. Geeignet sind insbesondere Siliconkautschuke. Dabei handelt es sich üblicherweise um Polyorganosiloxane, die zu Vernetzungsreaktionen fähige Gruppen aufweisen.

Derartige Polymere werden beispielsweise in Römpp Chemie Lexikon, CD-ROM Version 1.0, Thieme Verlag Stuttgart 1995, beschrieben.

Schließlich kann auch die Verbindungsklasse der Thermoplastischen Elastomere (TPE) herangezogen werden, um einem lasermarkierbaren Kunststoff in Verbindung mit dem erfindungsgemäßen Aluminiumgrieß bereitzustellen. TPE lassen sich wie Thermoplaste verarbeiten, haben jedoch kautschukelastische Eigenschaften. Es sind TPE-Blockpolymere, TPE-Pfropfpolymere und segmentierte TPE-Copolymere aus zwei oder mehr Monomerbausteinen geeignet. Besonders geeignete TPE sind thermoplastische Polyurethanelastomere (TPE-U oder TPU), Styrol-Oligoblock-Copolymere (TPE-S) wie SBS (Styrol-Butadien-Styrol-oxyBlockcopolymer) und SEES (Styrol-Ethylen-Butylen-Styrol-Blockcopolymer, erhältlich durch Hydrieren von SBS), thermoplastische Polyolefin-Elastomere (TPE-O), thermoplastische Polyester-Elastomere (TPE-E), thermoplastische Polyamid-Elastomere (TPE-A) und insbesondere thermoplastische Vulkanisate (TPE-V). Einzelheiten zu TPE findet der Fachmann in G. Holden et al., Thermoplastic Elastomers, 2. Auflage, Hanser Verlag, München 1996.

Die in Verbindung mit dem erfindungsgemäßen Aluminiumgrieß als Lasermarkierungsmittel verwendeten Kunststoffe können weiterhin übliche Zusatzstoffe enthalten. Diese Zusatzstoffe können beispielsweise aus der Gruppe, die aus Füllstoffen, Additiven, Weichmachern, Gleit- oder Entformungsmitteln, Schlagzähigkeitsverbesserern, Farbpigmenten, Farbstoffen, Flammschutzmitteln, Antistatika, optischen Aufhellern, Antioxidantien, antimikrobiell wirksame Biostabilisatoren, chemischen Treibmitteln oder organischen Vernetzungsmitteln sowie andere Zusatzstoffen oder deren Mischungen davon besteht, ausgewählt werden.

Gemäß einer bevorzugten Ausführungsform beträgt der Anteil der Aluminiumpartikel in dem lasermarkierbaren und/oder laserschweißbaren Kunststoff 0,0005 bis 0,8 Gew.-%, vorzugsweise 0,001 bis 0,5 Gew.-%, wobei sich die Angaben jeweils auf das Gesamtgewicht des Kunststoffs beziehen.

Überraschenderweise sind die vorteilhaften Eigenschaften des erfindungsgemäßen lasermarkierbaren- und/oder laserschweißbaren Kunststoffs schon mit sehr geringen Gehalten an Aluminiumgrieß als Lasermarkierungsmittel erreichbar. Unterhalb von 0,0005 Gew.-% Aluminiumgrieß können die erfindungsgemäßen Vorteile nicht mehr oder nur noch sehr eingeschränkt festgestellt werden.

Weiterhin ist bevorzugt, dass der Anteil der Aluminiumpartikel in dem Kunststoff bei 0,005 bis 0,5 Gew.-%, noch weiter bevorzugt 0,01 bis 0,2 Gew.-%, jeweils bezogen auf das Gesamtgewicht des lasermarkierbaren Kunststoffs beträgt.

Ab einer Menge von 0,2 Gew.-%, bezogen auf das Gesamtgewicht des Kunststoffs, kann das Material opak werden. In einem Mengenbereich zwischen 0,05 Gew.-% und 0,2 Gew.-% kann eine erste Trübung auftreten, die sich mit zunehmender Konzentration zu einer gräulichen Einfärbung des Materials steigern kann. Oberhalb von 0,8 Gew.-% ist der Kunststoff zu opak. Zudem ist kein weiterer Vorteil der Qualität der Lasermarkierbarkeit erkennbar. Somit würde die Verwendung von mehr Lasermarkierungsmittel nur unnötig die Herstellkosten des lasermarkierbaren Kunststoffs steigern.

Der Gehalt an Aluminiumgrieß im Kunststoff kann im Einzelfall in Abhängigkeit der Schichtdicke des zu markierenden Materials eingestellt werden, wobei vorzugsweise der Gehalt an Aluminiumgrieß mit abnehmender Schichtdicke erhöht werden kann.

So liegt die Schichtdicke einer Folie üblicherweise in einem Bereich von 20 μm bis ca. 5 mm. Die Dicke von spritzgegossenen Kunststoffen kann bis zu ca. 6 cm betragen.

Im Falle einer Folie kann der Gehalt an Aluminiumgrieß im Vergleich zu einem Kunststoffformkörper erhöht sein. Beispielsweise kann bei einem Kunststoffformkörper ein Gehalt von 0,005 Gew.-% sphärischer Aluminiumpartikel verwendet werden, wohingegen bei einer Folie ein Gehalt von 0,02 Gew.-% sphärischer Aluminiumpartikel geeignet sein kann. Der geeignete Gehalt an Aluminiumgrieß kann anhand von Versuchen vom Fachmann ohne weiteres ermittelt werden.

Eine kontrastreiche Markierung eines Kunststoffs ist - wie in den Beispielen gezeigt wird - schon mit einer Konzentration an Aluminiumpartikel von 0,005 Gew.-% möglich. Die Konzentrationsangaben in Gew.-% beziehen sich dabei jeweils auf das Gesamtgewicht des Materials und der Aluminiumpartikel.

Vorzugsweise liegt bei einer Schichtdicke des Kunststoffs in einem Bereich von 20 μm bis 500 μm der Anteil an Aluminiumpartikeln in einem Bereich von 0,005 bis 0,2 Gew.-%, weiter bevorzugt von 0,02 bis 0,05, jeweils bezogen auf das Gesamtgewicht aus Kunststoff und Aluminiumpartikel.

Bei einer Schichtdicke des Kunststoffs im Bereich von 500 μm bis 2 mm liegt der Anteil an Aluminiumpartikeln vorzugsweise in einem Bereich von 0,001 bis 0,1 Gew.-%., weiter bevorzugt von 0,005 bis 0,05, jeweils bezogen auf das Gesamtgewicht aus Kunststoff und Aluminiumpartikel.

Es wurde völlig überraschend festgestellt, dass - wie in den Beispielen gezeigt wird - ein Kunststoff, der Aluminiumpartikel mit einer Menge in einem Bereich von 0,005 bis zu 0,05 Gew.-% enthält, vollkommen transparent ist und zugleich hervorragend mit einem Laserstrahl kontrastreich markiert werden kann. Vorzugsweise wird in einem Konzentrationsbereich von 0,01 bis 0,04 Gew.-% Aluminiumpartikel gearbeitet.

Die geringe Menge an zu verwendendem Aluminiumgrieß als Lasermarkierungsmittel bietet gleich mehrere Vorteile. So werden die Materialeigenschaften des Kunststoffmaterials nicht bzw. nicht wesentlich durch den Zusatz des erfindungsgemäßen Aluminiumgrieß beeinflusst.

Bei Verwendung von Aluminiumpartikeln in einem Bereich von 0,001 bis 0,05 Gew.-% in einem transparenten oder klaren Kunststoffmaterial kommt es mithin zu keiner bzw. zu keiner wesentlichen Verschlechterung der Transparenz bzw. der Farbeigenschaften des mit dem Aluminiumgrieß als Lasermarkierungsmittel der vorliegenden Erfindung dotierten Materials, wobei jedoch überraschenderweise ein kontrastreiches Markieren oder Kennzeichnen mit einem Laserstrahl möglich ist.

Darüber hinaus ermöglicht die vorliegende Erfindung die äußerst preisgünstige Bereitstellung eines Kunststoffmaterials, da das Lasermarkierungsmittel aus preisgünstigen Materialien hergestellt und nur in geringem Umfang dem zu markierenden Material zugesetzt werden muss. Dies ist ein wesentlicher wirtschaftlicher Vorteil der vorliegenden Erfindung.

Der dreidimensionale Kunststoffkörper kann auch bspw. in Form eines Datenträgers wie einer CD, DVD, CD-ROM, etc. ausgebildet sein. Anhand einer abriebfesten und unveränderlichen Kennzeichnung können Original von Fälschungen unterschieden werden. Der dreidimensionale Kunststoffkörper kann bspw. auch ein Blisterstrip sein, in dem üblicherweise Medikamente in Tabletten oder Kapselform vertrieben werden. Beispielsweise können Etiketten oder Kunststoffe, insbesondere Kunststoffbehälter, mittels Laserstrahl mit einem Barcode versehen werden.

Bei weiteren erfindungsgemäßen Ausführungsformen kann der lasermarkierbare und/oder laserschweißbare Kunststoff ein Bestandteil eines Gegenstandes, der selbst nicht lasermarkierbar und/oder laserschweißbar sein muss, sein.

Die Beschriftung mit einem handelsüblichen Laser erfolgt derart, dass ein Probenkörper in den Strahlengang eines Lasers gebracht wird. Die erhaltene Markierung wird durch die Bestrahlungszeit bzw. Pulszahl bei Pulslasern und Bestrahlungsleistung des Lasers sowie des Kunststoffsystems bestimmt Die Leistung der verwendeten Laser hängt von der jeweiligen Anwendung ab und kann im Einzelfall vom Fachmann ohne weiteres ermittelt werden.

Prinzipiell sind alle üblichen Laser geeignet, beispielsweise Gaslaser und Festkörperlaser. Gaslaser sind z.B. (in Klammern ist die typische Wellenlänge der emittierten Strahlung angegeben):

$CO_2$-Laser (10,6 $\mu$m), Argon-Gaslaser (488 nm und 514,5 nm), Helium-Neon-Gaslaser (543 nm, 632,8 nm, 1150 nm), Krypton-Gaslaser (330 bis 360 nm, 420 bis 800 nm), Wasserstoff-Gaslaser (2600 bis 3000 nm) und Stickstoff-Gaslaser (337 nm).

Festkörperlaser sind z.B. (in Klammern die typische Wellenlänge der emittierten Strahlung):

Nd:YAG-Laser ($Nd^3$-$Y_3Al_5O_{12}$) (1064 nm) Hochleistungsdioden-Laser (800 bis 1000 nm), Rubinlaser (694 nm), $F_2$-Excimerlaser (157 nm), ArF-Excimerlaser (193 nm), KrCl-Excimerlaser (222 nm), KrF-Excimerlaser (248 nm) XeCl-Excimerlaser (308 nm), XeF-Excimerlaser (351 nm) sowie frequenzvervielfachte Nd:YAG-Laser mit Wellenlängen von 532 nm (frequenzverdoppelt), 355 nm (frequenzverdreifacht) oder 266 nm (frequenzvervierfacht).

Bevorzugte Laser für Laserbeschriftungen sind der Nd:YAG-Laser ($Nd^{3+}Y_3Al_5O_{12}$) (1064 nm).
Für die Laserschweißbarkeit ist bevorzugt der Nd:YAG-Laser ($Nd^{3+}Y_3Al_5O_{12}$) (1064 nm) sowie der Hochleistungsdioden-Laser (800 bis 1000 nm), die beide im kurzwelligen Infrarot emittieren.

Die verwendeten Laser werden üblicherweise bei Leistungen von 1 bis 400, bevorzugt 5 bis 100 und insbesondere 10 bis 50 Watt betrieben.

Die Energiedichten der eingesetzten Laser liegen im allgemeinen im Bereich von 0,3 mJ/cm² bis 50, J/cm² vorzugsweise 0,3 mJ/cm² bis 10 J/cm². Bei der Verwendung von gepulsten Lasern liegt die Pulsfrequenz im allgemeinen im Bereich von 1 bis 30 kHz. Entsprechende Laser, die vorliegend verwendet werden können, sind kommerziell erhältlich.

Ein sehr großer Vorteil des erfindungsgemäßen Aluminiumgrieß ist, dass die Wellenlänge des Laserstrahls nicht spezifisch auf den Aluminiumgrieß eingestellt werden muss. Metalle und somit auch Aluminium haben im Unterschied zu Metalloxiden ein breites Absorptionsvermögen, weshalb unterschiedlichste Laser mit verschiedenen Wellenlängen zur Lasermarkierung eines mit dem erfindungsgemäßen Aluminiumgrieß dotierten Kunststoffs verwendet werden können.

Im Stand der Technik werden teilweise Metalloxide wie Antimon-dotiertes Zinnoxid als Absorbermaterialien verwendet. Ungeachtet der toxikologischen Risiken erfordern diese Oxide die Verwendung einer definierten Wellenlänge an Laserlicht, um eine Markierung bewirken zu können, was in der Handhabung aufwendig ist.

Die Verwendung eines mit dem erfindungsgemäßen Aluminiumgrieß dotierten Kunststoffs kann auf allen Gebieten erfolgen, wo bisher übliche Druckverfahren zur Beschriftung von Kunststoffen eingesetzt werden. Beispielsweise können Formkörper aus mit dem erfindungsgemäßen Aluminiumgrieß als Lasermarkierungsmittel dotiertem Kunststoff in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus mit dem erfindungsgemäßen Aluminiumgrieß dotierten Kunststoff bestehen, können selbst an schwer zugänglichen Stellen mit Hilfe von Laserlicht markiert werden.

Weiterhin können mit dem erfindungsgemäßen Aluminiumgrieß dotierte Kunststoffsysteme bei Verpackungen im Lebensmittelbereich oder im Spielzeugbereich eingesetzt werden. Die Markierungen auf den Verpackungen zeichnen sich insbesondere dadurch aus, dass sie wisch- und kratzfest, stabil bei nachträglichen Sterilisationsprozessen, und hygienisch rein beim Markierungsprozess aufbringbar sind.

Ein weiteres wichtiges Anwendungsgebiet für die Laserbeschriftung sind Kunststoffmarken zur individuellen

EP 2 081 997 B1

Kennzeichnung von Tieren, sogenannte Cattle Tags oder Ohrmarken. Über ein Barcodesystem werden die Informationen gespeichert, welche spezifisch dem Tier zugehörig sind. Diese können bei Bedarf wieder mit Hilfe eines Scanners abgerufen werden. Die Beschriftung muss sehr dauerhaft werden, da die Ohrmarken teilweise über mehrere Jahre an den Tieren verbleiben.

Bei einer weiteren Ausführungsform wird der Aluminiumgrieß als Lasermarkierungsmittel in Kunststoffen zur Laser-Innengravur zur Erzeugung zwei- oder dreidimensionaler Bildstrukturen verwendet. Laser-Innengravurverfahren sind beispielsweise in der DE 10 2005 011 180 A1 beschrieben.

Die folgenden Beispiele erläutern die Erfindung, ohne sie einzuschränken.

**Beispiel 1:**

In einem Induktionstiegelofen (Fa. Induga, Ofeninhalt ca. 2,5 to) werden Aluminiumbarren kontinuierlich eingebracht und aufgeschmolzen. Im sogenannten Vorherd liegt die Aluminiumschmelze bei einer Temperatur von etwa 720 °C flüssig vor. Mehrere Düsen, die nach einem Injektorprinzip arbeiten, tauchen in die Schmelze ein und verdüsen die Aluminiumschmelze vertikal nach oben. Das Verdüsungsgas wird in Kompressoren (Fa. Kaeser) bis auf 20 bar verdichtet und in Gaserhitzern bis auf etwa 700 °C erhitzt. Der entstehende Aluminiumgrieß erstarrt und erkaltet im Fluge. Der Induktionsofen ist in eine geschlossene Anlage integriert. Die Verdüsung erfolgt unter Inertgas (Stickstoff). Die Abscheidung des Aluminiumgrieß erfolgt zuerst in einem Zyklon, wobei der dort abgeschiedene pulverförmige Aluminiumgrieß einen $d_{50}$ von 14-17 $\mu$m aufweist. Zur weiteren Abscheidung dient in Folge ein Multizyklon , wobei der in diesem abgeschiedene pulverförmige Aluminiumgrieß einen $d_{50}$ von 2,3-2,8 $\mu$m aufweist. Die Gas-Feststoff-Trennung erfolgt in einem Filter (Fa. Alpine) mit Metallelementen (Fa. Pall). Hierbei wird als feinste Fraktion ein Aluminiumgrieß mit einem $d_{10}$ von 0,7 $\mu$m, einem $d_{50}$ von 1,9 $\mu$m und einem $d_{90}$ von 3,8 $\mu$m gewonnen.

**Beispiel 2:** Vermahlung

In einer Topfmühle (Länge: 32 cm, Breite: 19 cm) werden 4 kg Glaskugeln (Durchmesser: 2 mm), 75 g feinster Aluminiumgrieß aus a), 200 g Testbenzin und 3,75 g Ölsäure aufgegeben. Anschließend wird 15 h lang bei 58 U/min vermahlen. Das Produkt wird durch Spülen mit Testbenzin von den Mahlkugeln getrennt und anschließend in einer Nasssiebung auf einem 25 $\mu$m-Sieb durchgesiebt. Das Feinkorn wird über einer Nutsche weitgehend von Testbenzin befreit und anschließend mit Testbenzin in einem Labormischer angepastet (ca. 50% Feststoffanteil).

Es wurde ein Aluminiumpigment mit einer mittleren Längsausdehnung $d_{50}$ von 13 $\mu$m und einer über Auszählung im REM ermittelten Dickenverteilung mit Kennwerten $h_{10}$ = 35 nm, $h_{50}$ = 54 nm und $h_{90}$ = 70 nm erhalten.

**Beispiel 3:**

Aluminiumgrieß:

Verwendet wurde ein Aluminiumgrieß, der gemäß Beispiel 1 hergestellt wurde. Der Grieß weisst folgende Kennzahlen seiner Größenverteilungskurve auf:

$$d_{10,Grieß} = 0,7 \; \mu m; \; d_{50,Grieß} = 1,6 \; \mu m; \; d_{90,Grieß} = 3,2 \; \mu m.$$

**Beispiel 4:**

In einer Topfmühle (Länge: 32 cm, Breite: 19 cm) werden 4,7 kg Glaskugeln (Durchmesser: 2,0 mm), 67 g feinster Aluminiumgrieß aus Beispiel 3, 200 g Testbenzin und 10 g Ölsäure aufgegeben. Anschließend wird 22 h lang bei 43 U/min vermahlen. Das Produkt wird durch Spülen mit Testbenzin von den Mahlkugeln getrennt und anschließend in einer Nasssiebung auf einem 25 $\mu$m-Sieb durchgesiebt. Das Feinkorn wird über einer Nutsche weitgehend von Testbenzin befreit und anschließend mit Testbenzin in einem Labormischer angepastet (ca. 50 % Feststoffanteil).

Es wurde ein Aluminiumpigment mit einer mittleren Längsausdehnung $d_{50}$ von 9 $\mu$m und einer über Auszählung im REM ermittelten Dickenverteilung mit Kennwerten $h_{10}$ = 22 nm, $h_{50}$ = 32 nm und $h_{90}$ = 43 nm erhalten.

**Vergleichsbeispiel 5:**

In Anlehnung an DE 103 15 775 A1 werden in einer Topfmühle (Länge: 32 cm, Breite: 19 cm) 3,1 kg Glaskugeln (Durchmesser: 2 mm), 93 g Aluminiumgrieß ($d_{Grieß,10}$-Wert = 3,9 $\mu$m, $d_{Grieß,50}$-Wert = 6,7 $\mu$m und $d_{Grieß,90}$-Wert = 10,3

$\mu$m), 310 g Testbenzin und 3,75 Ölsäure aufgegeben. Anschließend wird 15 h lang bei 58 U/min. vermahlen. Das Produkt wird durch Spülen mit Testbenzin von den Mahlkugeln getrennt und anschließend in einer Nasssiebung auf einem 25 $\mu$m-Sieb durchgesiebt. Das Feinkorn wird über einer Nutsche weitgehend von Testbenzin befreit und anschließend mit Testbenzin in einem Labormischer angepastet (ca. 60% Feststoffanteil).

Es wurde ein Aluminiumpigment mit einer mittleren Längsausdehnung $d_{50}$ von 20 $\mu$m und einer über Auszählung im REM ermittelten Dickenverteilung mit Kennwerten $h_{10}$ = 46 nm, $h_{50}$ = 74 nm und $h_{90}$ = 145 nm erhalten.

**Vergleichsbeispiel 6:** Kommerziell erhältliches Metalure L 55350 (Fa. Eckart)

**Vergleichsbeispiel 7:** Kommerziell erhältliches RotoVario 500 080 (Fa. Eckart), Silberdollarpigment für Tiefdruck

**Vergleichsbeispiel 8:** Kommerziell erhältliches RotoVario 042 (Fa. Eckart), Silberdollarpigment für Tiefdruck

Mit den Pigmenten der Beispiele 2 und 4 sowie der Vergleichsbeispiele 5 bis 8 wurden Rückseitenapplikationen mit Hilfe einer Tiefdruckfarbe auf Basis eines kommerziell erhältlichen Polyvinylbutyrals durch Bedrucken einer MELINEX 400 Folie (PET-Folie, 50 $\mu$m) zum einen mittels einer Rakel mit einer Rillentiefe von 24 $\mu$m und zum anderen mittels einer Druckmaschiene (Druckmaschine: Rotova 300, Fa. Rotocolor, 3 Farbwerke; Druckgeschwindigkeit 100 m/min, Viskosität 15 s DIN-4-Auslaufbecher; 70 Linien/cm; Pigmentierungshöhe je nach Teilchendicke zwischen 3,5% (Beispiel 6) und 14,5% (Beispiel 8)) erstellt.

Die Rückseitenapplikationen wurden optisch durch eine Glanzmessung bei 60° in Anlehnung an die DIN 67 530 (Gerät: micro-TRI-gloss von Byk-Gardner, D-82538 Geretsried, Deutschland) charakterisiert (s. Tab. 1). Kalibriert wurde hier mittels Dunkelkalibrierung sowie einer schwarzen Spiegelglasplatte mit Werten von 92 für 60°.
Die Bewertung der in üblicher Art und Weise bei 60° erfolgten Glanzmessung ergibt, dass die aus dem erfindungsgemäßen Alumiuniumgrieß hergestellten Pigmente (Beispiel 2) einen weitaus höheren Glanz als konventionelle Pigmente aus der konventionellen Nassvermahlung (siehe Vergl.-Beispiele 7 und 8) aufweisen.

Auch der visuelle Eindruck der gemäß den erfindungsgemäßen Beispielen 2 und 4 hergestellten Pigmente ist durch einen sehr stark metallischen Spiegeleffekt - ähnlich wie bei PVD-Pigmenten (siehe Vergl.-Beispiel 6) - geprägt.

Der Glanz des erfindungsgemäßen Pigmentes in dieser Applikation entspricht in etwa dem Glanz von PVD-Pigmenten (siehe Vergl.-Beispiel 6). Beide Applikationen vermitteln einen hochmetallischen Spiegeleffekt.

Bei den gemäß dem Vergleichsbeispiel 5 hergestellten Aluminiumeffektpigmenten konnte die Rückseitenapplikation durch Bedruckung nicht befriedigend durchgeführt werden. Die Pigmente wiesen ein unzureichendes Transferverhalten auf. Dieses Metallpigment weist ebenfalls eine außerordentlich geringe mittlere Dicke, jedoch noch eine breitere Dickenverteilung im Vergleich zu Beispielen 2 oder 4 auf und ist für diese Applikation nicht geeignet.

**Tab. 1: Rückseitenapplikation MELINEX Folie**

| Probe | Rückseitenapplikation durch Druck | | Rückseitenapplikation durch Rakel | |
|---|---|---|---|---|
| | Glanz 60° | Visueller Eindruck | Glanz 60° | Visueller Eindruck |
| Erf.-gem. Beispiel 2 | 643 | sehr stark metallisch, "Spiegeleffekt" | 619 | sehr stark metallisch "Spiegeleffektt" |
| Erf.-gem. Beispiel 4 | 660 | sehr stark metallisch, "Spiegeleffekt" | 650 | sehr stark metallisch, "Spiegeleffekt" |
| Vergl.-Beispiel 5* | --- | --- | 504 | metallisch |
| Vergl.-Beispiel 6 | 677 | sehr stark metallisch "Spiegeleffektt" | 672 | sehr stark metallisch "Spiegeleffektt" |
| Vergl.-Beispiel 7 | 494 | metallisch | 445 | metallisch |
| Vergl.-Beispiel 8 | 339 | metallisch , weiß | 267 | metallisch , weiß |
| * Diese Probe ließ sich nicht applizieren, da das Transferverhalten nicht ausreichend war. | | | | |

**Lasermarkierung**

**Beispiel 9:**

Das erfindungsgemäßes Pulver aus sphärischen Aluminiumpartikeln aus Beispiel 1 wurde in Mischung mit thermoplastischem Polypropylen (PP) (R 771 - 10; Fa. DOW, Deutschland, Wesseling) im Spritzgussverfahren zu Platten (Fläche 42 × 60 mm, Dicke 2 mm) verarbeitet.

Zur Herstellung einer 1 Gew.-%igen Mischung wurde wie folgt verfahren:

495 g Polypropylen-Granulat (PP) und 5 g des Aluminium-Pulvers wurden in einem Taumelmischer vermischt und nachfolgend in einem Doppelschneckenextruder (Fa. Bersdorff, Deutschland, Durchmesser 25 mm, 28UD) ohne Zugabe weiterer Additive bei einer Verarbeitungstemperatur von ca. 230 °C zu einem Granulat verarbeitet. Dieses Granulat wurde anschließend mittels Spritzgießmaschine (Arburg Allrounder 221-55-250) bei der jeweiligen stoffspezifischen Verarbeitungstemperatur (z.B. PP 260 °C) zu den Muster-Plättchen mit den oben genannten Abmessungen verarbeitet.

Es wurden Konzentrationsreihen unter Zusatz von 1,0 Gew.-%, 0,5 Gew.-%, 0,2 Gew".-%, 0,1 Gew.-% 0,05 Gew.-%, 0,02 Gew.-%, 0,01 Gew.-%, 0,005 Gew.-% und 0 Gew.-% sphärischer Aluminiumpartikel in Polypropylen gefertigt und die jeweils erhaltenen Plättchen mit einem Nd:YAG-Laser (Wellenlänge: 1064 nm; Leistung: 8 W, Impulsfrequenz: 5 KHz; Schreibgeschwindigkeiten: 50 - 250 mm/s) beschriftet. Die Angaben in Gew.-% beziehen sich dabei auf das Gesamtgewicht von Aluminiumpartikeln und PP.

PP-Platten ohne einen Gehalt an sphärischen Aluminiumpartikeln waren nicht mit dem Nd:YAG-Laser markierbar.

Bei Verwendung der sphärischen Aluminiumpartikel ab einer Menge von 0,005 Gew.-% in PP konnten kontrastreiche, dunkle und abriebfeste Markierungen erhalten werden, die eine exzellente Randschärfe und Punktgenauigkeit aufwiesen. Die PP-Platten blieben dabei transparent und farbneutral.

Bei einem Gehalt an sphärischen Aluminiumpartikeln in einem Bereich von 0,05-0,5 Gew.-% wurde zunehmend eine gräuliche Einfärbung festgestellt, die mit einem Verlust an Transparenz einherging. PP-Platten mit einem Gehalt an sphärischen Aluminiumpartikeln von mehr als 0,5 Gew-% waren grau-opak.

Es konnten keinerlei störenden Grobpartikel oder Flitter beobachtet werden. Zudem waren hierbei bereits in niedrigen Konzentrationsbereichen (0,005-0,02 Gew.-%) mit höheren Schreibgeschwindigkeiten (150-200 mm/s, 8 W, Impulsfrequenz: 5 KHz.) des Lasers exzellente Punktgenauigkeiten und hohe Kontraste gewährleistet.

Es konnten keine Fließlinien oder Schlieren in den PP-Platten, die die sphärischen Aluminiumpartikel enthielten, beobachtet werden.

**Vergleichsbeispiel 10:**

Sphärische Aluminiumpartikel mit einem $D_{50}$-Wert von 140 $\mu$m und einem $D_{90}$-Wert von 230 $\mu$m ($D_{99}$-Wert: nicht bestimmbar) (bestimmt mit dem Helos-Gerät wie in Beispiel 1) wurden analog zu Beispiel 9 mit PP verarbeitet.

Bei Mengen ab einem Bereich von 0,05 Gew.-% sphärischer Aluminiumpartikel in PP wurden kontrastreiche, dunkle und abriebfeste Markierungen erhalten, die eine sehr geringe Randschärfe und Punktgenauigkeit aufwiesen und somit ungenügend waren. Die PP-Platten blieben dabei transparent und farbneutral. Bei Mengen in einem Bereich von 0,2-2,0 Gew.-% sphärischer Aluminiumpartikel wurde zunehmend eine gräuliche Einfärbung festgestellt, die mit einem Verlust an Transparenz einherging. PP-Platten mit einem Gehalt an sphärischen Aluminiumpartikeln von mehr als 2,0 Gew-% waren grau-opak. Über den gesamten Konzentrationsbereich konnten signifikante Anteile an Grobpartikeln und eine signifikante Ausbildung glitzernder Flitter beobachtet werden.

**Vergleichsbeispiel 11:**

Feine, plättchenförmige Aluminiumeffektpigmente (PC 200, Fa. Eckart GmbH & Co KG, Fürth, Deutschland) mit einem $D_{10}$-Wert von 1,5 $\mu$m, $D_{50}$-Wert von 4,0 $\mu$m und einem $D_{90}$-Wert von 10,0 $\mu$m (bestimmt mit dem Helos-Gerät wie in Beispiel 1) wurden mit PP analog zu Beispiel 9 verarbeitet.

Bei Mengen an sphärischen Aluminiumpartikeln von ≥0,005 Gew.-% ließen sich Markierungen erhalten. Dabei wiesen die PP-Platten bereits bei diesem Gehalt an Aluminiumeffektpigmenten eine Grautrübung auf. Bei einer Menge von 0,01 Gew.-% Aluminiumeffektpigmente war die Grautrübung vergleichbar mit der in Beispiel 9 bei einem Gehalt an sphärischen Aluminiumpartikeln von ≥0,1% Gew.-% erhaltenen Grautrübung. Bereits bei einem Pigmentgehalt von 0,02 Gew.-% Aluminiumeffektpigmente waren die Platten grau-opak.

Die Markierungen waren kontrastreich, dunkel und abriebfest, zeigten jedoch im Vergleich zu Beispiel 9 eine verminderte Punktgenauigkeit. Es waren die bei Verwendung von plättchenförmigen Pigmenten in der Kunststoffmasse durch Spritzgießen erhaltenen Produkte typischen Fließlinien bzw. Schlieren zu beobachten.

**Vergleichsbeispiel 12:**

Antimon-dotierte Zinnoxid-Partikel (Mark-it™-Pigmente, Fa. Engelhard Corporation, USA) wurden mit PP in Entsprechung zu Beispiel 9 verarbeitet.

Die erhaltenen PP-Platten zeigten vergleichbare Eigenschaften zu den in Beispiel 9 hergestellten PP-Platten, jedoch mit geringfügig herabgesetzten Punktgenauigkeiten. Anstelle der in den Beispielen 9, 10 und 11 erhaltenen Graufärbung trat hier bei einem Pigmentgehalt von ≥0,1 % Gew.-% eine bräunliche Färbung auf. Die Bildung von Fließlinien oder Schlieren konnte nicht beobachtet werden. Die verwendeten Mark-it™-Pigmente enthalten jedoch hoch-toxisches Antimon.

**Vergleichsbeispiel 13:**

Glimmerplättchen mit Antimon-dotierter Zinnoxid-Beschichtung (Lazerflair® 825, Fa. E. Merck KGaA, Deutschland) wurden mit PP in Entsprechung zu Beispiel 9 verarbeitet.

Die PP-Platten zeigten vergleichbare Eigenschaften zu den in Beispiel 9 erhaltenen PP-Platten. Jedoch waren hier über alle Konzentrationsbereiche zwar gute, aber im Vergleich zu Beispiel 9, 10 und 11 waren verminderten Punktgenauigkeiten zu beobachten; eine erste Trübung trat bei Konzentrationen von ≥0.1% Gew.-% ein und das Medium wurde bei Konzentrationen von ≥2,0 Gew.-% opak.

Anstelle einer bei einem Aluminiumpartikelgehalt von ≥0,1 % Gew.-% im Beispiel 9 erhaltene Graufärbung trat in analoger Weise bei den Lazerflair® 825-Pigmenten eine grünliche Einfärbung auf. In den spritzgegossenen Platten waren die beim Spritzgießen von plättchenförmigen Effektpigment-haltigen Kunststoffmassen typischen Fließlinien bzw. Schlieren zu beobachten. Das Pigment Lazerflair® 825 enthält ebenfalls toxisches Antimon.

**Tabelle 2: Zusammenstelluna der Ergebnisse der Beispiele Lasermarkierung**

| Beispiel | Additiv | Polymer | Marklerbarkeit des Polymers ohne Zusatz | Konzentrationen für kontrastreiche Markierung [Gew.-%] | Konzentrationen bei denen Trübung auftritt [Gew.%] | Konzentrationen bei denen Einfärbung auftritt [Gew.%] | Konzentrationen mit Verlust von Transparenz (opakes Medium) [Gew.- %] | Punktgenaulgkeit | Auftreten von sichtbaren Partikeln (z.B. Grobpartikel oder Flitter) |
|---|---|---|---|---|---|---|---|---|---|
| Beispiel 9 | Al-Pulver (sphärisch) | PP | nicht markierbar | $\geq 0,005$ | $\geq 0,05$ | $\geq 0,1$ (gräulich) | $\geq 0,5$ | exzellent | nein |
| Vergleichsbeispiel 10 | Al-Pulver (sphärisch) | PP | nicht markierbar | $\geq 0,05$ | $\geq 0,2$ | $\geq 0,5$ (gräulich) | $\geq 2,0$ | ungenügend | signifikant |
| Vergleichsbeispiel 11 | Al-Pigment (plättchenförmig) | PP | nicht markierbar | $\geq 0.005$ | $\geq 0,005$ | $\geq 0,01$ (gräulich) | $\geq 0,02$ | gut | nein |
| Vergleichsbeispiel 12 | Mark-it™ (Antimon-dotierte Zinnoxid-Partikel) | PP | nicht markierbar | $\geq 0,005$ | $\geq 0,05$ | $\geq 0,1$ (bräunlich) | $\geq 0,5$ | exzellent | nein |
| Vergleichsbeispiel 13 | Lazerflair® 825 (Glimmerplättchen Antimon-dotierter Zinnoxid-Beschichtung) | PP | nicht markierbar mit | $\geq 0,005$ | $\geq 0,1$ | $\geq 0,1$ (grünlich) | $\geq 2,0$ | gut | nein |

Wie aus der zusammenfassenden Tabelle 2 ersichtlich ist, ermöglicht die vorliegende Erfindung die Bereitstellung von lasermarkierbaren Kunststoffen, die mittels des erfindungsgemäßen Aluminiumgrießes als Lasermarkierungsmittel transparent und zu gleich mit sehr gutem Kontrast und hoher Abbildungsschärfe mit einem Laser markierbar sind.

Eine sehr gute kontrastreiche Markierung ist in der Regel ab einem Gehalt von sphärischen Aluminiumpartikeln von 0,005 Gew.-%, bezogen auf das Gesamtgewicht der Kunststoffmasse, erhältlich. Eine Graufärbung oder Trübung erfolgt in der Regel ab einem Gehalt von sphärischen Aluminiumpartikeln von 0,05 Gew.-%.

Aus dem Vergleich mit den Vergleichsbeispielen 12 und 13 ist ersichtlich, dass die vorliegende Erfindung die Bereitstellung von lasermarkierbaren Kunststoffen ohne Verwendung von hochtoxischen Antimon-haltigen Verbindungen oder Partikeln ermöglicht.

**Patentansprüche**

1. Aluminiumgrieß,
   **dadurch gekennzeichnet,**
   **dass** der Aluminiumgrieß eine Korngrößenverteilung mit einem $d_{10}$-Wert von 0,15 bis 3,0 $\mu$m, einem $d_{50}$-Wert von 0,8 bis 5,0 $\mu$m und einem $d_{90}$-Wert von 2,0 bis 8,0 $\mu$m aufweist.

2. Aluminiumgrieß nach Anspruch 1,
   **dadurch gekennzeichnet,**
   **dass** der Aluminiumgrieß eine Korngrößenverteilung mit einem $d_{10}$-Wert von 0,15 bis 0,6 $\mu$m, einem $d_{50}$-Wert von 0,8 bis 2,0 $\mu$m und einem $d_{90}$-Wert von 2,0 bis 4,0 $\mu$m aufweist.

3. Aluminiumgrieß nach einem der vorherigen Ansprüche,
   **dadurch gekennzeichnet,**
   **dass** der Aluminiumgrieß einen Gehalt an Aluminium von 99,0 Gew.-% bis 99,9 Gew.-%, bezogen auf das Gesamtgewicht des Aluminiumgriesses, aufweist.

4. Aluminiumgrieß nach einem der vorherigen Ansprüche,
   **dadurch gekennzeichnet,**
   **dass** die Aluminiumgrießpartikel eine sphärische, vorzugsweise runde, kugelförmige und/oder annähernd ellipsoide, Form aufweisen.

5. Verfahren zur Herstellung von Aluminiumgrieß nach einem der vorherigen Ansprüche,
   **dadurch gekennzeichnet,**
   **dass** es die folgenden Schritte umfaßt:

   (a) Zerstäuben einer flüssigen Aluminiumschmelze unter Erhalt von Aluminiumpartikeln
   (b) Sammeln der in Schritt (a) erhaltenen Aluminiumpartikeln unter Erhalt von Aluminiumgrieß und
   (c) Klassieren des in Schritt (b) gesammelten Aluminiumgrieß.

6. Verfahren nach Anspruch 5,
   **dadurch gekennzeichnet,**
   **dass** das flüssige Aluminium unter einer Inertgasatmosphäre, vorzugsweise aus Stickstoff und/oder Helium, zerstäubt wird.

7. Verfahren nach Anspruch 5 oder 6,
   **dadurch gekennzeichnet,**
   **dass** der Aluminiumgrieß in dem Schritt (c) mittels Windsichter und/oder Zyklon klassiert wird.

8. Verfahren nach einem der Ansprüche 5 bis 7,
   **dadurch gekennzeichnet,**
   **dass** der Aluminiumgrieß vor dem Klassieren mit weiterem Aluminiumgrieß gemischt und/oder homogenisiert wird.

9. Verwendung von Aluminiumgrieß nach einem der Ansprüche 1 bis 4 zur Herstellung von plättchenförmigen Aluminiumpigmenten, wobei die plättchenförmigen Aluminiumpigmente eine über die Dickenauszählung mit Rasterelektronenmikroskopie ermittelte mittlere Dicke von 15 bis 75 nm aufweisen.

10. Verwendung von Aluminiumgrieß nach Anspruch 9, wobei die plättchenförmigen Aluminiumpigmente eine über eine Dickenauszählung mit Rasterelektronenmikroskopie ermittelte relative Breite der Dickenverteilung $\Delta h$, welche anhand der entsprechenden Summendurchgangskurve der relativen Häufigkeiten nach der Formel $\Delta h = 100 \times (h_{90}-h_{10}) / h_{50}$, berechnet wird, von 30 % bis weniger als 70% aufweisen.

11. Verwendung von Aluminiumgrieß nach einem der Ansprüche 1 bis 4 als Lasermarkierungsmittel oder Laserschweißbarkeitsmittel in Kunststoff.

12. Verwendung von Aluminiumgrieß nach Anspruch 11, wobei der Anteil des Aluminiumgrieß in Kunststoff 0,0005 bis 0,8 Gew.-%, vorzugsweise 0,001 bis 0,5 Gew.-%, jeweils bezogen auf das Gesamtgewicht des Kunststoffs, beträgt.

13. Verwendung von Aluminiumgrieß nach Anspruch 11 oder 12 als Lasermarkierungsmittel für Kunststoffe, wobei der Anteil der Aluminiumpartikel in dem Kunststoff 0,005 bis 0,5 Gew.-%, vorzugsweise 0,01 bis 0,1 Gew.-%, jeweils bezogen auf das Gesamtgewicht des lasermarkierbaren Kunststoffs, beträgt.

14. Verwendung von Aluminiumgrieß nach einem der Ansprüche 11 bis 13 als Lasermarkierungsmittel für Kunststoffe,
**dadurch gekennzeichnet,**
**dass**
der Kunststoff eine Kunststofffolie oder ein Etikett ist.

15. Verwendung von Aluminiumgrieß nach Anspruch 14 als Lasermarkierungsmittel,
**dadurch gekennzeichnet,**
**dass** der Kunststoff eine Kunststofffolie mit einem Anteil an Aluminiumgrieß von 0,01 bis 1,0 Gew.-%, vorzugsweise 0,02 bis 0,5 Gew.-%, jeweils bezogen auf das Gesamtgewicht der lasermarkierbaren Kunststofffolie, ist.

**Claims**

1. Aluminium powder,
   **characterised in that**
   the aluminium powder has a grain size distribution with a $d_{10}$ value of 0.15 to 3.0 $\mu$m, a $d_{50}$ value of 0.8 to 5.0 $\mu$m and a $d_{90}$ value of 2.0 to 8.0 $\mu$m.

2. Aluminium powder as claimed in claim 1,
   **characterised in that**
   the aluminium powder has a grain size distribution with a $d_{10}$ value of 0.15 to 0.6 $\mu$m, a $d_{50}$ value of 0.8 to 2.0 $\mu$m and a $d_{90}$ value of 2.0 to 4.0 $\mu$m.

3. Aluminium powder as claimed in one of the preceding claims,
   **characterised in that**
   the aluminium powder has an aluminium content of 99.0 % by weight to 99.9 % by weight by reference to the total weight of the aluminium powder.

4. Aluminium powder as claimed in one of the preceding claims,
   **characterised in that**
   the aluminium powder particles are of a spherical, preferably rounded ball-type and/or approximately ellipsoid shape.

5. Method of producing aluminium powder as claimed in one of the preceding claims,
   **characterised in that**
   it comprises the following steps:

   (a) atomizing a liquid aluminium melt to produce aluminium particles,
   (b) collecting the aluminium particles obtained in step (a) to produce aluminium powder and
   (c) screening the aluminium powder collected in step (b).

6. Method as claimed in claim 5,
   **characterised in that**
   the liquid aluminium is atomized under an inert gas atmosphere, preferably of nitrogen and/or helium.

**7.** Method as claimed in claim 5 or 6,
**characterised in that**
the aluminium powder is screened by means of air separators and/or cyclones in step (c).

**8.** Method as claimed in one of claims 5 to 7,
**characterised in that**
the aluminium powder is mixed with other aluminium powder and/or homogenised prior to screening.

**9.** Use of aluminium powder as claimed in one of claims 1 to 4 for producing plate-shaped aluminium pigments, for which the plate-shaped aluminium pigments have a mean thickness of 15 to 75 nm across the thickness range as measured by scanning electron microscopy.

**10.** Use of aluminium powder as claimed in claim 9 for which the plate-shaped aluminium pigments have a relative width of thickness distribution $\Delta h$ of 30 % to less than 70 % across a thickness range calculated from the corresponding cumulative transmission curve of relative frequencies based on the formula $\Delta h = 100 \times (h_{90}-h_{10}) / h_{50}$ as measured by scanning electron microscopy.

**11.** Use of aluminium powder as claimed in one of claims 1 to 4 as a laser marking substance or a substance to permit laser welding in plastic.

**12.** Use of aluminium powder as claimed in claim 11, for which the proportion of aluminium powder in plastic is 0.0005 to 0.8 % by weight, preferably 0.001 to 0.5 % by weight, by reference to the total weight of the plastic respectively.

**13.** Use of aluminium powder as claimed in claim 11 or 12 as a laser marking substance for plastics, for which the proportion of aluminium particles in the plastic is 0.005 to 0.5 % by weight, preferably 0.01 to 0.1 % by weight, by reference to the total weight of the laser-markable plastic respectively.

**14.** Use of aluminium powder as claimed in one of claims 11 to 13 as a laser marking substance for plastics,
**characterised in that**
the plastic is a plastic film or a label.

**15.** Use of aluminium powder as claimed in claim 14 as a laser marking substance,
**characterised in that**
the plastic is a plastic film containing a proportion of aluminium powder of 0.01 to 1.0 % by weight, preferably 0.02 to 0.5 % by weight, by reference to the total weight of the laser-markable plastic film respectively.

**Revendications**

**1.** Poudre d'aluminium,
**caractérisée en ce**
**que** la poudre d'aluminium présente une répartition granulométrique d'une valeur $d_{10}$ de 0,15 à 3,0 $\mu$m, une valeur $d_{50}$ de 0,8 à 5, 0 $\mu$m et une valeur $d_{80}$ de 2, 0 à 8,0 $\mu$m.

**2.** Poudre d'aluminium selon la revendication 1,
**caractérisée en ce**
**que** la poudre d'aluminium présente une répartition granulométrique d'une valeur $d_{10}$ de 0,15 à 0,6 $\mu$m, une valeur $d_{50}$ de 0, 8 à 2, 0 $\mu$m et une valeur $d_{90}$ de 2, 0 à 4,0 $\mu$m.

**3.** Poudre d'aluminium selon l'une des revendications précédentes,
**caractérisée en ce**
**que** la poudre d'aluminium présente une teneur en aluminium de 99,0 % en poids à 99,9 % en poids par rapport au poids total de la poudre d'aluminium.

**4.** Poudre d'aluminium selon l'une des revendications précédentes,
**caractérisée en ce**
**que** les particules de poudre d'aluminium présentent une forme sphérique, de préférence arrondie, conique et/ou à peu près ellipsoïde.

**5.** Procédé de production de poudre d'aluminium selon l'une des revendications précédentes,
**caractérisé en ce**
**qu'**il comprend les étapes suivantes :

     (a) pulvérisation d'une masse fondue d'aluminium liquide donnant des particules d'aluminium,
     (b) recueil des particules d'aluminium obtenues à l'étape (a) donnant de la poudre d'aluminium et
     (c) criblage de la poudre d'aluminium recueillie à l'étape (b).

**6.** Procédé selon la revendication 5,
**caractérisé en ce**
**que** l'aluminium liquide est pulvérisé sous une atmosphère de gaz inerte, de préférence d'azote et/ou d'hélium.

**7.** Procédé selon la revendication 5 ou 6,
**caractérisé en ce**
**que** la poudre d'aluminium est criblée à l'étape (c) à l'aide d'un séparateur pneumatique et/ou d'un cyclone.

**8.** Procédé selon l'une des revendications 5 à 7,
**caractérisé en ce**
**que** la poudre d'aluminium est mélangée et/ou homogénéisée avant le criblage avec une autre poudre d'aluminium.

**9.** Utilisation de poudre d'aluminium selon l'une des revendications 1 à 4, pour la production de pigments d'aluminium de forme plaquettaire, les pigments d'aluminium de forme plaquettaire présentant une épaisseur moyenne déterminée par microscopie électronique à balayage sur un éventail d'épaisseurs de 15 à 75 nm.

**10.** Utilisation de poudre d'aluminium selon la revendication 9, sachant que les pigments d'aluminium de forme plaquettaire présentent une largeur relative des répartitions d'épaisseurs $\Delta h$ déterminée par microscopie électronique à balayage sur un éventail d'épaisseurs, qui est calculée sur la base de la courbe de passages totale correspondante des fréquences relatives selon la formule $\Delta h = 100 \times (h_{90} - h_{10}) / h_{50}$, de 30 % à moins de 70 %.

**11.** Utilisation de poudre d'aluminium selon l'une des revendications 1 à 4, comme agent de marquage laser ou agent de soudabilité laser dans une matière plastique.

**12.** Utilisation de poudre d'aluminium selon la revendication 11, sachant que la proportion de poudre d'aluminium dans la matière plastique est de 0,0085 à 0,8 % en poids, de préférence, de 0,001 à 0,5 % en poids, respectivement, par rapport au poids total de matière plastique.

**13.** Utilisation de poudre d'aluminium selon la revendication 11 ou 12 comme agent de marquage laser pour matière plastique, la proportion de particules d'aluminium dans la matière plastique étant de 0,005 à 0,5 % en poids, de préférence de 0,01 à 0,1 % en poids respectivement, par rapport au poids total de la matière plastique pouvant être marquée au laser.

**14.** Utilisation de poudre d'aluminium selon l'une des revendications 11 à 13, comme agent de marquage laser pour matière plastique,
**caractérisée en ce**
**que** la matière plastique est une feuille de matière plastique ou une étiquette.

**15.** Utilisation de poudre d'aluminium selon la revendication 14 comme agent de marquage laser,
**caractérisée en ce**
**que** la matière plastique est une feuille de matière plastique présentant une proportion de poudre d'aluminium de 0,01 à 1,0 % en poids, de préférence de 0,02 à 0,5 % en poids respectivement, par rapport au poids total de la feuille de matière plastique pouvant être marquée au laser.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004026955 A1
- DE 10331785 A1
- DE 69306789 T2
- DE OS2314874 A
- EP 1621586 A1
- EP 1080810 B1
- EP 1424371 A1
- WO 2004087816 A
- EP 1211003 A
- DE 1300266 B
- DE 1495730 A
- US 2071250 A
- US 2071251 A
- US 2130523 A
- US 2130948 A
- US 2241322 A
- US 2312966 A
- US 2512606 A
- US 3393210 A
- EP 38094 A
- EP 38582 A
- EP 39524 A
- EP 299444 A
- EP 129195 A
- EP 129196 A
- EP 302485 A
- DE 19728629 A
- EP 99532 A
- US 3055859 A
- US 4224419 A
- EP 113112 A
- EP 135130 A
- DE 102005011180 A1
- DE 10315775 A1

**In der Beschreibung aufgeführte Nicht-Patentliteratur**

- Kunststoff-Taschenbuch. Hanser-Verlag, 1992
- Kunststoff-Handbuch. Hanser-Verlag, 1966
- Römpp Chemie Lexikon. Thieme Verlag, 1995
- **G. Holden et al.** Thermoplastic Elastomers. Hanser Verlag, 1996